# EUROPEAN PATENT APPLICATION

(11) **EP 4 503 581 A1**
(43) Date of publication of application: **05.02.2025**
(21) Application number: 23773973.5
(22) Date of filing: 23.03.2023
(51) Int. Cl.: H04L 69/30

(54) **DATA TRANSMISSION METHOD FOR COMMUNICATION SYSTEM, AND TERMINAL AND NETWORK-SIDE DEVICE**

(30) Priority: 25.03.2022 CN 202210306911
(71) Applicant: VIVO MOBILE COMMUNICATION CO., LTD., Dongguan, Guangdong 523863 (CN)
(72) Inventor: ZHANG, Hongping, Dongguan, Guangdong 523863 (CN); XIAO, Xiao, Dongguan, Guangdong 523863 (CN); BAO, Wei, Dongguan, Guangdong 523863 (CN)
(74) Representative: Shieldmark
(86) International application number: PCT/CN2023/083463
(87) International publication number: WO 2023/179728

(57) **Abstract**

This application discloses a data transmission method of a communication system, a terminal, and a network-side device and pertains to the field of communication technologies. The data transmission method of a communication system in embodiments of this application includes: receiving at a first protocol layer, by a sending-end device, a first data packet of a first plane from a second protocol layer; generating at the first protocol layer, by the sending-end device, a protocol data unit PDU of the first protocol layer based on the first data packet, where the PDU includes first indication information, the first indication information being used to indicate the second protocol layer; delivering at the first protocol layer, by the sending-end device, the PDU to a third protocol layer, where the third protocol layer is an immediately lower layer of the first protocol layer, and the third protocol layer includes at least one of the following: a PDCP layer, an SDAP layer, and a tunnel protocol layer; and sending, by the sending-end device, the PDU through a first plane bearer, where the first plane bearer is used to transmit data of the first plane.

## Description

### CROSS-REFERENCE TO RELATED APPLICATIONS

This application claims priority to Chinese Patent Application No. 202210306911.1, filed on March 25, 2022 and entitled "DATA TRANSMISSION METHOD OF COMMUNICATION SYSTEM, TERMINAL, AND NETWORK-SIDE DEVICE," which is incorporated herein by reference in its entirety.

### TECHNICAL FIELD

This application pertains to the field of communication technologies and specifically relates to a data transmission method of a communication system, a terminal, and a network-side device.

### BACKGROUND

Conventional mobile communication networks are divided into a control plane and a user plane. The user plane is mainly used to support the transmission of user data (for example, application layer data), and the control plane is mainly used to support the transmission of control signaling, such as radio resource control (Radio Resource Control, RRC) connection establishment, bearer establishment, and radio resource configuration. With the development of mobile communication technologies, for better network maintenance and management and to support some service features, networks also need to transmit some data in addition to user data and control signaling, such as self-organizing network (Optimizing Networks, SON)/minimization of drive test (Minimization of Drive Test, MDT) data obtained from terminals and data for positioning service interactions. Currently, the amount of such data is relatively small and is transmitted through the control plane. However, with the further development of communication technologies, such as the introduction of artificial intelligence (Artificial Intelligence, AI), networks may need to collect more of such data. If control plane transmission methods are still used, the current control signaling transmission may be affected (for example, causing congestion and increasing the delay of control signaling), and transmitting such data as control signaling will make the control signaling protocol more complex.

### SUMMARY

An embodiment of this application provides a data transmission method of a communication system, so as to solve the problem of how to transmit data in addition to user data and control signaling.

According to a first aspect, a data transmission method of a communication system is provided and applied to a sending-end device. The method includes:
receiving at a first protocol layer, by a sending-end device, a first data packet of a first plane from a second protocol layer, where the second protocol layer is an immediately upper layer of the first protocol layer, the second protocol layer is used to generate data of the first plane, the first plane is used to transmit data terminated at an internal node of a communication network, and the first plane is different from a control plane and a user plane;
generating at the first protocol layer, by the sending-end device, a protocol data unit PDU of the first protocol layer based on the first data packet, where the PDU includes first indication information, the first indication information being used to indicate the second protocol layer;
delivering at the first protocol layer, by the sending-end device, the PDU to a third protocol layer, where the third protocol layer is an immediately lower layer of the first protocol layer, and the third protocol layer includes at least one of the following: a PDCP layer, an SDAP layer, and a tunnel protocol layer; and
sending, by the sending-end device, the PDU through a first plane bearer, where the first plane bearer is used to transmit data of the first plane.

According to a second aspect, a data transmission method of a communication system is provided and applied to a receiving-end device. The method includes:
receiving at a first protocol layer, by a receiving-end device, a protocol data unit PDU of the first protocol layer from a third protocol layer of the receiving-end device through a first plane bearer, where the first plane bearer is used to transmit data of a first plane, the third protocol layer is an immediately lower layer of the first protocol layer, and the third protocol layer includes at least one of the following: a packet data convergence protocol PDCP layer, a service data adaptation protocol SDAP layer, and a tunnel protocol layer;
parsing at the first protocol layer, by the receiving-end device, the PDU to obtain first indication information and a first data packet of the first plane, where the first plane is used to transmit data terminated at an internal node of a communication network, the first plane is different from a control plane CP and a user plane UP, the PDU includes the first indication information, and the first indication information is used to indicate a second protocol layer; and
delivering at the first protocol layer, by the receiving-end device, the first data packet to the second protocol layer of the receiving-end device based on the first indication information, where the second protocol layer is an immediately upper layer of the first protocol layer, and the second protocol layer is used to obtain data of the first plane.

According to a third aspect, a data transmission method of a communication system is provided and applied to a terminal. The method includes:
receiving, by a terminal, an RRC reconfiguration message sent by a network-side device, where the RRC reconfiguration message carries first information, the first information being used to indicate establishment of a first plane bearer;
establishing, by the terminal, the first plane bearer and sending an RRC reconfiguration complete message to the network-side device; and
transmitting, by the terminal, data of the first plane through the first plane bearer; where
the first plane bearer is used to transmit data of the first plane, the first plane is used to transmit data terminated at an internal node of a communication network, and the first plane is different from a control plane and a user plane.

According to a fourth aspect, a data transmission method of a communication system is provided and applied to a network-side device. The method includes:
sending, by a network-side device, an RRC reconfiguration message to a terminal, where the RRC reconfiguration message carries first information, the first information being used to indicate establishment of a first plane bearer; and
receiving, by the network-side device, an RRC reconfiguration complete message sent by the terminal, where the network-side device transmits data of the first plane through the first plane bearer; where
the first plane bearer is used to transmit data of the first plane, the first plane is used to transmit data terminated at an internal node of a communication network, and the first plane is different from a control plane and a user plane.

According to a fifth aspect, a data transmission apparatus of a communication system is provided, including:
a first receiving unit, configured to receive at a first protocol layer a first data packet of a first plane from a second protocol layer, where the second protocol layer is an immediately upper layer of the first protocol layer, the second protocol layer is used to generate data of the first plane, the first plane is used to transmit data terminated at an internal node of a communication network, and the first plane is different from a control plane and a user plane;
a generating unit, configured to generate at the first protocol layer a protocol data unit PDU of the first protocol layer based on the first data packet, where the PDU includes first indication information, the first indication information being used to indicate the second protocol layer;
a first delivering unit, configured to deliver at the first protocol layer the PDU to a third protocol layer, where the third protocol layer is an immediately lower layer of the first protocol layer, and the third protocol layer includes at least one of the following: a PDCP layer, an SDAP layer, and a tunnel protocol layer; and
a first sending unit, configured to send the PDU through a first plane bearer, where the first plane bearer is used to transmit data of the first plane.

According to a sixth aspect, a data transmission apparatus of a communication system is provided, including:
a second receiving unit, configured to receive at a first protocol layer a protocol data unit PDU of the first protocol layer from a third protocol layer of the receiving-end device through a first plane bearer, where the first plane bearer is used to transmit data of a first plane, the third protocol layer is an immediately lower layer of the first protocol layer, and the third protocol layer includes at least one of the following: a packet data convergence protocol PDCP layer, a service data adaptation protocol SDAP layer, and a tunnel protocol layer;
a parsing unit, configured to parse at the first protocol layer the PDU to obtain first indication information and a first data packet of the first plane, where the first plane is used to transmit data terminated at an internal node of a communication network, the first plane is different from a control plane CP and a user plane UP, the PDU includes first indication information, and the first indication information is used to indicate a second protocol layer; and
a second delivering unit, configured to deliver at the first protocol layer the first data packet to the second protocol layer of the receiving-end device based on the first indication information, where the second protocol layer is an immediately upper layer of the first protocol layer, and the second protocol layer is used to obtain data of the first plane.

According to a seventh aspect, a data transmission apparatus of a communication system is provided, including:
a third receiving unit, configured to receive an RRC reconfiguration message sent by a network-side device, where the RRC reconfiguration message carries first information, the first information being used to indicate establishment of a first plane bearer;
a bearer establishing unit, configured to establish the first plane bearer and send an RRC reconfiguration complete message to the network-side device; and
a first transmitting unit, configured to transmit data of the first plane through the first plane bearer, where
the first plane bearer is used to transmit data of the first plane, the first plane is used to transmit data terminated at an internal node of a communication network, and the first plane is different from a control plane and a user plane.

According to an eighth aspect, a data transmission apparatus of a communication system is provided, including:
a fourth sending unit, configured to send an RRC reconfiguration message to a terminal, where the RRC reconfiguration message carries first information, the first information being used to indicate establishment of a first plane bearer;
a second transmitting unit, configured to receive an RRC reconfiguration complete message sent by the terminal and transmit data of the first plane through the first plane bearer; where
the first plane bearer is used to transmit data of the first plane, the first plane is used to transmit data terminated at an internal node of a communication network, and the first plane is different from a control plane and a user plane.

According to a ninth aspect, a sending-end device is provided. The sending-end device includes a processor and a memory. The memory is configured to store a program or instructions executable on the processor. When the program or instruction is executed by the processor, the steps of the data transmission method of a communication system according to the first aspect are implemented.

According to a tenth aspect, a sending-end device is provided, including a processor and a communication interface, where the communication interface is configured to receive at a first protocol layer a first data packet of a first plane from a second protocol layer; the processor is configured to generate at the first protocol layer a protocol data unit PDU of the first protocol layer based on the first data packet; the communication interface is further configured to deliver at the first protocol layer the PDU to a third protocol layer; and the communication interface is further configured to send the PDU through a first plane bearer.

According to an eleventh aspect, a receiving-end device is provided. The receiving-end device includes a processor and a memory. The memory is configured to store a program or instructions executable on the processor. When the program or instruction is executed by the processor, the steps of the data transmission method of a communication system according to the second aspect are implemented.

According to a twelfth aspect, a receiving-end device is provided, including a processor and a communication interface, where the communication interface is configured to receive at a first protocol layer a protocol data unit PDU of the first protocol layer from a third protocol layer of the receiving-end device through a first plane bearer; the processor is configured to parse at the first protocol layer the PDU to obtain first indication information and a first data packet of the first plane; and the communication interface is further configured to deliver at the first protocol layer the first data packet to the second protocol layer of the receiving-end device based on the first indication information.

According to a thirteenth aspect, a terminal is provided. The terminal includes a processor and a memory. The memory is configured to store a program or instructions executable on the processor. When the program or instruction is executed by the processor, the steps of the data transmission method of a communication system according to the third aspect are implemented.

According to a fourteenth aspect, a terminal is provided, including a processor and a communication interface, where the communication interface is configured to receive an RRC reconfiguration message sent by a network-side device; the communication interface is further configured to establish the first plane bearer and send an RRC reconfiguration complete message to the network-side device; and the communication interface is further configured to transmit data of a first plane through the first plane bearer.

According to a fifteenth aspect, a network-side device is provided. The network-side device includes a processor and a memory. The memory is configured to store a program or instructions executable on the processor. When the program or instructions are executed by the processor, the steps of the data transmission method of a communication system according to the fourth aspect are implemented.

According to a sixteenth aspect, a network-side device is provided, including a processor and a communication interface, where the communication interface is configured to send an RRC reconfiguration message to a terminal; and the communication interface is further configured to receive an RRC reconfiguration complete message sent by the terminal and transmit data of the first plane through the first plane bearer.

According to a seventeenth aspect, a communication system is provided, including a terminal and a network-side device. The terminal may be configured to execute the steps of the data transmission method of the communication system according to the first aspect, and the network-side device may be configured to execute the steps of the data transmission method of the communication system according to the second aspect.

According to an eighteenth aspect, a communication system is provided, including a terminal and a network-side device. The terminal may be configured to execute the steps of the data transmission method of the communication system according to the third aspect, and the network-side device may be configured to execute the steps of the data transmission method of the communication system according to the fourth aspect.

According to a nineteenth aspect, a readable storage medium is provided, where a program or instruction is stored in the readable storage medium; and the program or instruction is executed by a processor to implement the steps of the data transmission method of a communication system according to the first aspect, or to implement the steps of the data transmission method of a communication system according to the second aspect, or to implement the steps of the data transmission method of a communication system according to the third aspect, or to implement the steps of the data transmission method of a communication system according to the fourth aspect.

According to a twentieth aspect, a chip is provided, where the chip includes a processor and a communication interface, the communication interface is coupled to the processor, and the processor is configured to run a program or instruction to implement the data transmission method of a communication system according to the first aspect, the data transmission method of a communication system according to the second aspect, the data transmission method of a communication system according to the third aspect, or the data transmission method of a communication system according to the fourth aspect.

According to a twenty-first aspect, a computer program or a program product is provided, where the computer program or the program product is stored in a storage medium, and the program or the program product is executed by at least one processor to implement the steps of the data transmission method of a communication system according to the first aspect, or to implement the step of the data transmission method of a communication system according to the second aspect, or to implement the step of the data transmission method of a communication system according to the third aspect, or to implement the step of the data transmission method of a communication system according to the fourth aspect.

In the embodiments of this application, a first plane, a first protocol layer, and a first plane bearer are introduced, and a protocol stack is designed for interaction of first plane data, so that the transmission of first plane data is achieved. In this way, the transmission of data from various types of service layers can be supported, and the introduction of new "service" layers is supported to meet the needs of future new technology developments. As compared with the control plane transmission method, the existing control signaling transmission is not affected.

### BRIEF DESCRIPTION OF DRAWINGS

FIG. 1 is a block diagram of a wireless communication system to which embodiments of this application are applicable;
FIG. 2 is a schematic diagram of a user plane protocol stack;
FIG. 3 is a schematic diagram of a control plane protocol stack;
FIG. 4 is an example diagram of a data plane, a control plane, and a user plane according to an embodiment of this application;
FIG. 5 is a schematic diagram of a protocol stack for interaction of data plane data between a UE and an access network device according to an embodiment of this application;
FIG. 6 is a schematic diagram of a protocol stack for interaction of data plane data between a UE and a core network device or DPF according to an embodiment of this application;
FIG. 7 is a first flow diagram of a data transmission method of a communication system according to an embodiment of this application;
FIG. 8 is a second flow diagram of a data transmission method of a communication system according to an embodiment of this application;
FIG. 9 is a third flow diagram of a data transmission method of a communication system according to an embodiment of this application;
FIG. 10 is a schematic diagram of a key hierarchy in a 5G system;
FIG. 11 is a fourth flow diagram of a data transmission method of a communication system according to an embodiment of this application;
FIG. 12 is a signaling interaction diagram of a data transmission method of a communication system according to an embodiment of this application;
FIG. 13 is a first schematic structural diagram of a data transmission apparatus of a communication system according to an embodiment of this application;
FIG. 14 is a second schematic structural diagram of a second data transmission apparatus of a communication system according to an embodiment of this application;
FIG. 15 is a third schematic structural diagram of a data transmission apparatus of a communication system according to an embodiment of this application;
FIG. 16 is a fourth schematic structural diagram of a data transmission apparatus of a communication system according to an embodiment of this application;
FIG. 17 is a schematic structural diagram of a communication device according to an embodiment of this application;
FIG. 18 is a schematic diagram of a hardware structure of a terminal for implementing embodiments of this application; and
FIG. 19 is a schematic structural diagram of a network-side device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first," "second," and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to long term evolution (Long Term Evolution, LTE) or LTE-Advanced (LTE-Advanced, LTE-A) systems, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for illustrative purposes, and NR terms are used in most of the following descriptions, although these technologies may also be applied to other applications than the NR system application, for example, to the 6th generation (6^{th} Generation, 6G) communication system.

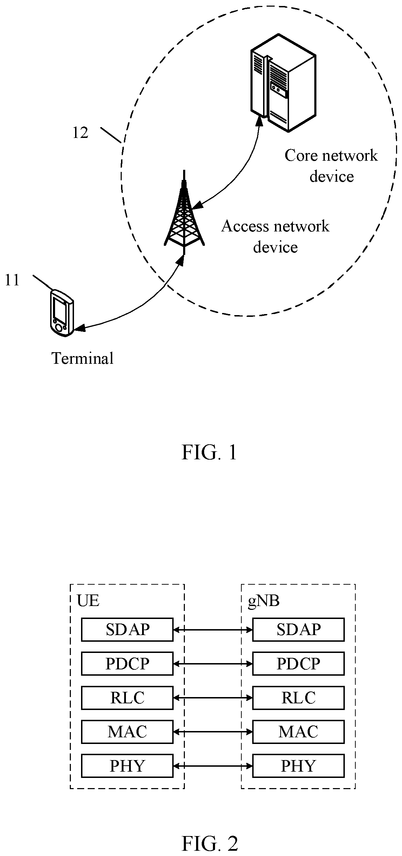

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), or pedestrian user equipment (PUE), a smart appliance (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. It should be noted that the specific type of the terminal 11 is not limited in the embodiments of this application. The network-side device 12 can include an access network device or core network device, where the access network device 12 can also be referred to as a radio access network device, radio access network (Radio Access Network, RAN), radio access network function, or radio access network unit. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or other appropriate terms in the art. Provided that the same technical effects are achieved, the base station is not limited to any specific technical term. It should be noted that in the embodiments of this application, only the base station in the NR system is used as an example for description, although the specific type of the base station is not limited. The core network device can include but is not limited to at least one of the following: core network node, core network function, mobility management entity (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized network configuration, CNC), network repository function (Network Repository Function, NRF), network exposure function (Network Exposure Function, NEF), local NEF (Local NEF or L-NEF), binding support function (Binding Support Function, BSF), application function (Application Function, AF), and the like. It should be noted that in the embodiments of this application, only the core network device in the NR system is introduced as an example, and the specific type of the core network device is not limited.

First, relevant content involved in this application is described.

In related art, in a mobile communication system, data that needs to be transmitted at least includes user data and control signaling. The transmission characteristics of user data and control signaling are significantly different. For example, user data may have a large amount of data, and the amount of control signaling data is relatively smaller; control signaling demands low latency and high reliability, is visible to the network, terminates at the network, and requires processing by the network, while the user data content is transparent to the network. Based on the different characteristics mentioned above, the concepts of control plane and user plane have been introduced. User plane functions are mainly used to support the transmission of user data, and control plane functions are mainly used to support the transmission of control signaling, such as RRC connection establishment, bearer establishment, and radio resource configuration. In wireless air interfaces, user plane data is sent through data radio bearer (Data Radio Bearer, DRB), and control plane data is sent through signaling radio bearer (Signaling Radio Bearer, SRB).

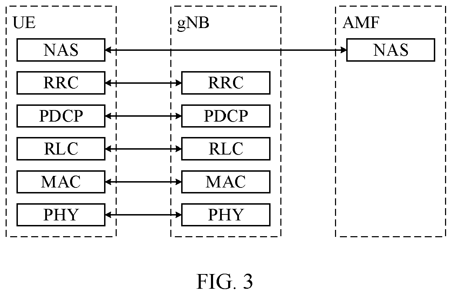

In 5G systems, the user plane protocol stack consists of the service data adaptation protocol (Service Data Adaptation Protocol, SDAP), packet data convergence protocol (Packet Data Convergence Protocol, PDCP), radio link control (Radio Link Control, RLC), medium access control (Medium Access Control, MAC), and physical layer (Physical Layer, PHY) layers. The user plane protocol stack is shown in FIG. 2. The control plane protocol stack consists of the non-access stratum (Non-Access Stratum, NAS), radio resource control (Radio Resource Control, RRC), PDCP, RLC, MAC, and PHY layers. The control plane protocol stack is shown in Figure 3.

With the development of mobile communication technologies, for better network maintenance and management and to support some service features, networks also need to transmit some data in addition to user data and control signaling, such as SON/MDT data obtained from terminals and data for positioning service interactions. Currently, this type of data is transmitted over the control plane. With the further development of communication technologies, such as the introduction of AI, networks may need to collect more of such data. If control plane transmission methods are still used, the current control signaling transmission may be affected (for example, causing congestion and increasing the delay of control signaling), and transmitting such data as control signaling will make the control signaling protocol more complex.

To address the foregoing issues, the embodiments of this application introduces a new plane referred to as a first plane. The first plane can be used to transmit data that is terminated at an internal node of the communication network, other than user data (which is terminated outside the communication network) and control signaling that is used to maintain the bearer connection. For ease of description, this first plane is referred to as the data plane in the embodiments of this application. For data transmission in the data plane, a new protocol layer is introduced, which is referred to as a data plane adaptation protocol (Data Plane Adaptation Protocol, DPAP) herein for the convenience of description. This protocol layer is used to transmit data in the data plane (of course, this protocol layer can also be used to generate data of the data plane, for example, signaling data of the data plane).

The following describes in detail a data transmission method of a communication system provided in the embodiments of this application through some embodiments and application scenarios thereof with reference to the accompanying drawings.

To implement transmission of data that is terminated at an internal node of the communication network, other than user data (which is terminated outside the communication network) and control signaling that is used to maintain the bearer connection, it is necessary to solve the problems of how to design a data plane protocol and how to transmit data of the data plane.

First, a protocol stack architecture of the data plane proposed in an embodiment of this application is described.

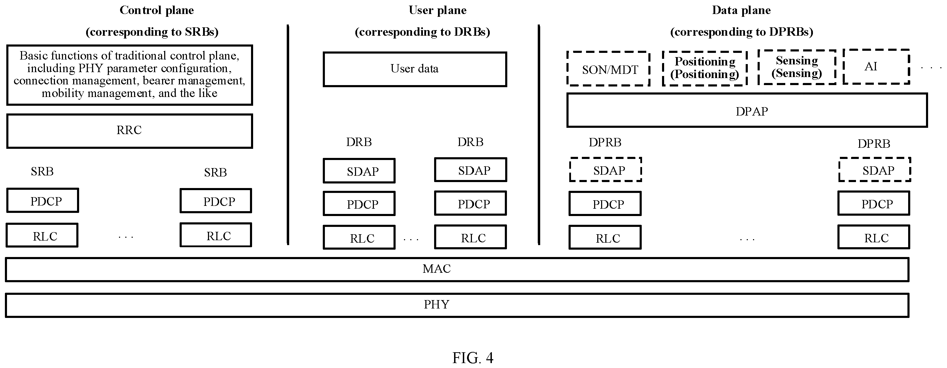

In the wireless air interface, an example diagram of a data plane, a control plane, and a user plane is shown in FIG. 4. As shown in FIG. 4, an immediately upper protocol layer of the DPAP protocol layer may be one or more protocol layers that support various "services terminated in the communication network," such as the SON/MDT protocol layer, the positioning (Positioning) protocol layer, the sensing (Sensing) protocol layer, and the artificial intelligence (AI) protocol layer. The one or more protocol layers can be protocol layers that generate data plane data, and these protocol layers can be considered as the "service" layer of the data plane.

An immediately lower protocol layer of the DPAP protocol layer can be a layer 2 protocol stack, such as the SDAP layer or the PDCP layer. For a core network or data plane function (Data Plane Function, DPF, a logical entity introduced for the data plane for obtaining data of the data plane), it can be a tunnel protocol layer (for example, the GTP-u protocol layer).

It should be noted that in the embodiments of this application, a next immediately lower protocol layer of the DPAP protocol layer is not the RRC layer or the NAS layer, which means that data of the data plane is not based on the RRC protocol layer and the NAS protocol layer of the control plane. Message structures of the RRC protocol and the NAS protocol are relatively complex and need to be encoded and decoded by ASN.1, while a large amount of processing resources is consumed in ASN.1 encoding and decoding. Thus data of the data plane will not be processed through these protocol layers of the control plane, thereby reducing the processing resource overhead.

The DPAP protocol layer is responsible for mapping data packets of immediately upper protocol layers to one or more data plane radio bearers (data plane radio bearer, DPRB) and delivering data packets received from the DPRBs to the corresponding immediately upper protocol layers. When multiple immediately upper protocol layers are supported, indication information is carried in a message at the DPAP protocol layer (for example, which may be a message header if it is in the message header, or may be just an information element in the message) for indicating which one is the corresponding immediately upper protocol layer, and based on the indication information, the data packet is delivered to the corresponding upper protocol layer. The DPAP protocol layer is similar to a "platform" that supports multiple "service" layers of multiple different types of data planes. Based on this "platform", introduction of new "service" layers can be supported in the future to adapt to the development of new technologies in the future.

Data of a data plane might need to be interacted between a UE and an access network device, or between a UE and a core network device or a DPF.

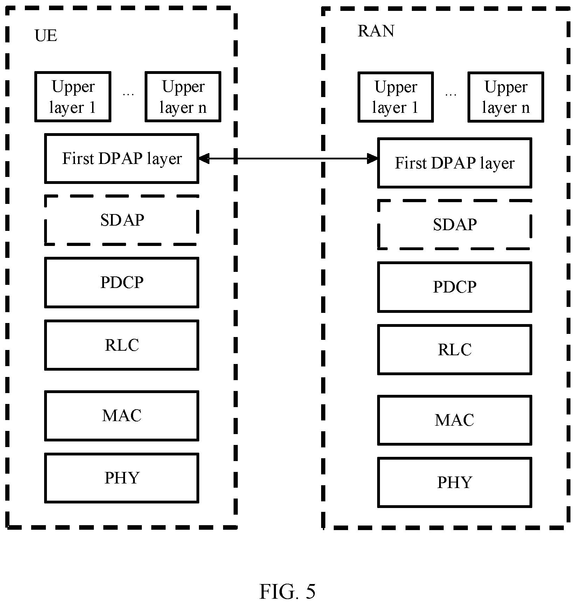

The protocol stack for interaction of data plane data between a UE and an access network device may be as shown in FIG. 5, optionally with or without an SDAP layer.

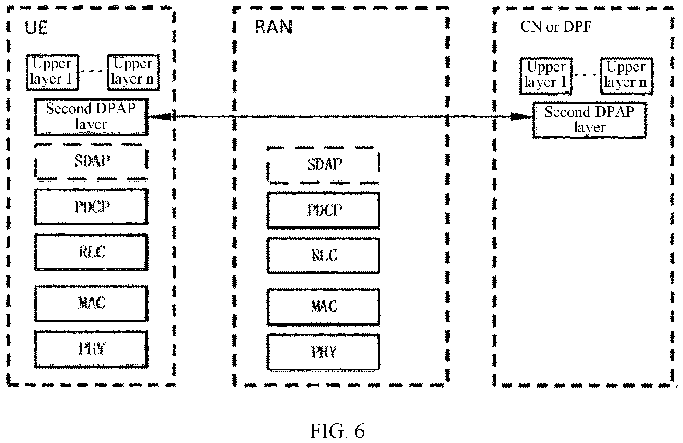

The protocol stack for interaction of data plane data between a UE and a core network device or DPF may be as shown in FIG. 6, optionally with or without an SDAP layer.

In FIG. 5 and FIG. 6, on the UE side, the first DPAP layer and the second DPAP layer may be the same protocol layer or different protocol layers.

To demonstrate the protocol stack architecture mentioned above, embodiments of this application are described from the perspectives of the sender and the receiver.

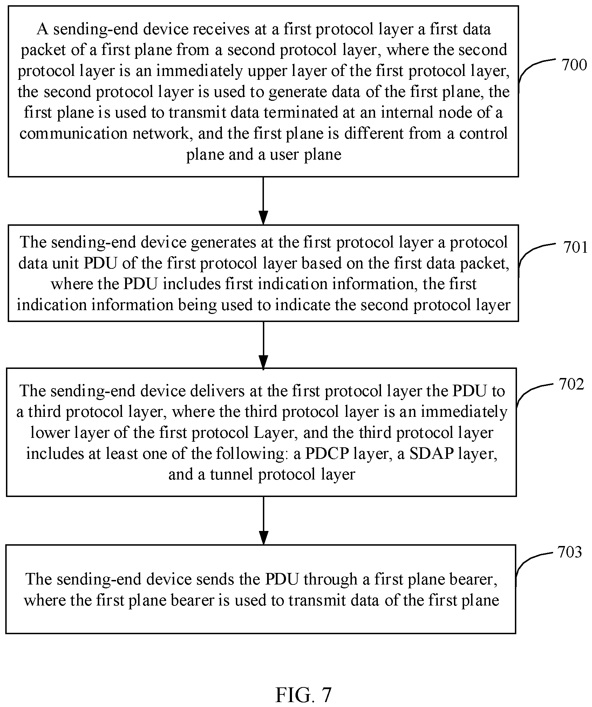

FIG. 7 is a first flow diagram of a data transmission method of a communication system according to an embodiment of this application. This method is applied to a sending-end device, that is, the data transmission method of a communication system according to this embodiment of this application is described from the perspective of the sender. As shown in FIG. 7, the method includes the following steps.

Step 700: A sending-end device receives at a first protocol layer a first data packet of a first plane from a second protocol layer, where the second protocol layer is an immediately upper layer of the first protocol layer, the second protocol layer is used to generate data of the first plane, the first plane is used to transmit data terminated at an internal node of a communication network, and the first plane is different from a control plane and a user plane.

The first protocol layer may be referred to a DPAP layer.

The second protocol layer is an immediately upper layer of the first protocol layer and can be understood as a first "service" layer of a data plane for generating data of the first plane.

The first "service" layer having data to be sent to a peer end delivers data packets to the first protocol layer, and then, a sending-end device receives at the first protocol layer the first data packet of the first plane from the second protocol layer.

The first plane is referred to as the data plane, and the first plane may alternatively be named by other names. In the embodiments of this application, for ease of description, the first plane is referred to as the data plane, which does not constitute a limitation on the first plane.

The first plane is used to transmit data terminated at an internal node of the communication network.

Optionally, the internal node of the communication network includes an access network device, a core network device, or a first plane function entity. The data terminated at an internal node of the communication network include data terminated at an access network device, a core network device, or a first plane function entity. The first plane function entity may be referred to as a DPF.

Step 701: The sending-end device generates at the first protocol layer a protocol data unit PDU of the first protocol layer based on the first data packet, where the PDU includes first indication information, the first indication information being used to indicate the second protocol layer.

It can be understood that the DPAP layer generates a DPAP PDU (Protocol Data Unit, protocol data unit) based on the first data packet (DPAP SDU (Service Data Unit, service data unit)) of the first plane. The DPAP PDU is a protocol data unit of the first protocol layer, and the DPAP PDU includes (or carries) first indication information. Optionally, a header of the DPAP PDU includes the first indication information, where the first indication information is used to indicate the second protocol layer. Therefore, after receiving the DPAP PDU, the receiving-end device can deliver the SDU in the DPAP PDU to a corresponding first "service" layer based on the first indication information.

Optionally, the first "service" layer is the second protocol layer and may be a self-organizing network SON protocol layer, a minimization of drive test MDT protocol layer, a positioning protocol layer, a sensing protocol layer, or an artificial intelligence AI protocol layer.

Step 702: The sending-end device delivers at the first protocol layer the PDU to a third protocol layer, where the third protocol layer is an immediately lower layer of the first protocol layer.

It can be understood that the DPAP layer delivers the DPAP PDU to the immediately lower layer of the DPAP layer, that is, the third protocol layer.

Optionally, the third protocol layer includes at least one of the following: a PDCP layer, a SDAP layer, and a tunnel protocol layer. Therefore, the data of the data plane will not be processed through the RRC layer or NAS layer of the control plane.

Step 703: The sending-end device sends the PDU through a first plane bearer, where the first plane bearer is used to transmit data of the first plane.

The first plane bearer can be referred to as a data plane radio bearer (data plane radio bearer, DPRB).

The sending-end device sends the PDU to the receiving-end device through the first plane bearer.

Optionally, the first plane bearer is different from a signaling radio bearer SRB and a data radio bearer DRB.

Optionally, the sending-end device includes a terminal, an access network device, a core network device, or a first plane function entity.

In this embodiment of this application, a first plane, a first protocol layer, and a first plane bearer are introduced, and a protocol stack is designed for interaction of first plane data, so that the transmission of first plane data is achieved. In this way, the transmission of data from various types of service layers can be supported, and the introduction of new "service" layers is supported to meet the needs of future new technology developments. As compared with the control plane transmission method, the existing control signaling transmission is not affected.

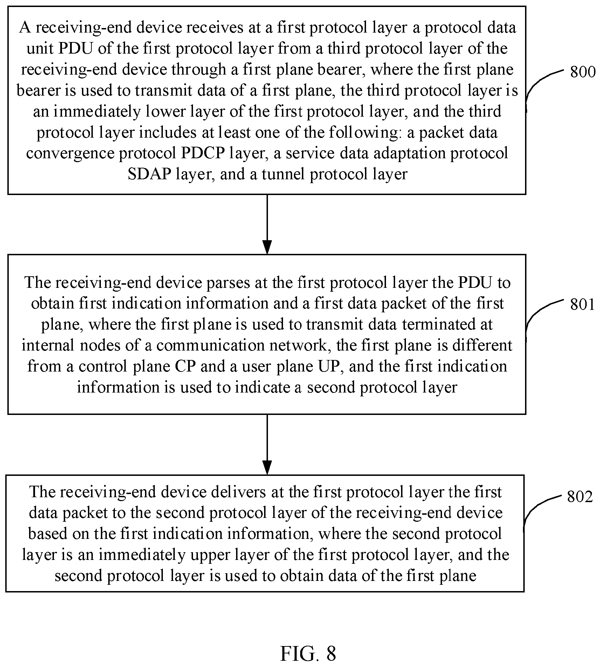

FIG. 8 is a second flow diagram of a data transmission method of a communication system according to an embodiment of this application. This method is applied to a receiving-end device, that is, the data transmission method of a communication system according to this embodiment of this application is described from the perspective of the receiver. As shown in FIG. 8, the method includes the following steps.

Step 800: A receiving-end device receives at a first protocol layer a protocol data unit PDU of the first protocol layer from a third protocol layer of the receiving-end device through a first plane bearer, where the first plane bearer is used to transmit data of a first plane, the third protocol layer is an immediately lower layer of the first protocol layer, and the third protocol layer includes at least one of the following: a packet data convergence protocol PDCP layer, a service data adaptation protocol SDAP layer, and a tunnel protocol layer.

It can be understood that the DPAP layer (that is, the first protocol layer) of the receiving-end device receives the DPAP PDU from the immediately lower protocol layer (that is, the third protocol layer) through the data plane bearer. The immediately lower protocol layer is the PDCP layer or SDAP layer or tunnel protocol layer.

Step 801: The receiving-end device parses at the first protocol layer the PDU to obtain first indication information and a first data packet of the first plane, where the first plane is used to transmit data terminated at an internal node of a communication network, the first plane is different from a control plane CP and a user plane UP, the PDU includes the first indication information, and the first indication information is used to indicate a second protocol layer.

The header of the DPAP PDU includes first indication information. The first indication information is used to indicate the first "service" layer. The DPAP layer parses the DPAP PDU to obtain the first indication information and the DPAP SDU (that is, the first data packet of the first plane).

Step 802: The receiving-end device delivers at the first protocol layer the first data packet to the second protocol layer of the receiving-end device based on the first indication information, where the second protocol layer is an immediately upper layer of the first protocol layer, and the second protocol layer is used to obtain data of the first plane.

There may be multiple immediately upper protocol layers of the DPAP layer. The receiving-end device is at the DPAP layer and delivers the DPAP SDU to an upper protocol layer indicated by the first indication information (that is, the second protocol layer, which is also the first "service" layer) based on the first indication information. Therefore, the second protocol layer can process the received first data packet of the first plane.

Optionally, the second protocol layer includes one of the following: a self-organizing network SON protocol layer, a minimization of drive test MDT protocol layer, a positioning protocol layer, a sensing protocol layer, or an artificial intelligence AI protocol layer.

Optionally, the first plane bearer is different from a signaling radio bearer SRB and a data radio bearer DRB.

Optionally, the internal node of the communication network includes an access network device, a core network device, or a first plane function entity.

Optionally, the receiving-end device includes a terminal, an access network device, a core network device, or a first plane function entity.

Optionally, the header of the PDU includes the first indication information.

In this embodiment of this application, a first plane, a first protocol layer, and a first plane bearer are introduced, and a protocol stack is designed for interaction of first plane data, so that the transmission of first plane data is achieved. In this way, the transmission of data from various types of service layers can be supported, and the introduction of new "service" layers is supported to meet the needs of future new technology developments. As compared with the control plane transmission method, the existing control signaling transmission is not affected.

In this embodiment of this application, data of the data plane is transmitted through the data plane bearer. The following describes relevant content of the data plane bearer.

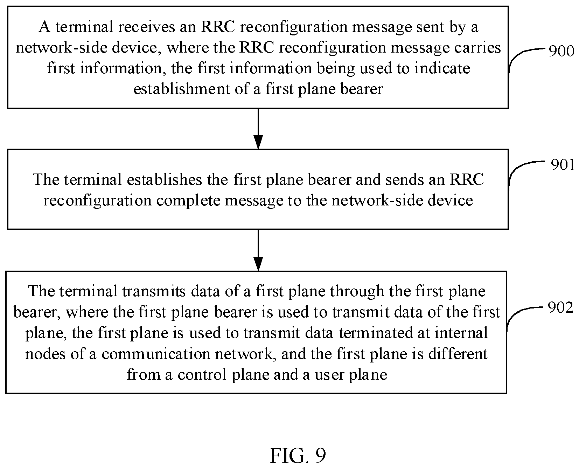

FIG. 9 is a third flow diagram of a data transmission method of a communication system according to an embodiment of this application. The method is applied to a terminal. As shown in FIG. 9, the method includes the following steps.

Step 900: A terminal receives an RRC reconfiguration message sent by a network-side device, where the RRC reconfiguration message carries first information, the first information being used to indicate establishment of a first plane bearer.

In this embodiment of this application, a terminal receives an RRC reconfiguration message sent by a network-side device, where the RRC reconfiguration message carries first information, the first information being used to indicate establishment of a first plane bearer. The first plane bearer is used to transmit data of the first plane, the first plane is used to transmit data terminated at an internal node of a communication network, and the first plane is different from a control plane and a user plane.

In current wireless air interfaces, control signaling of the control plane is transmitted through SRB, and user data of the user plane is transmitted through DRB. In current mobile communication protocols, DRB and SRB are two different bearer types and are added through different information elements, as shown below,

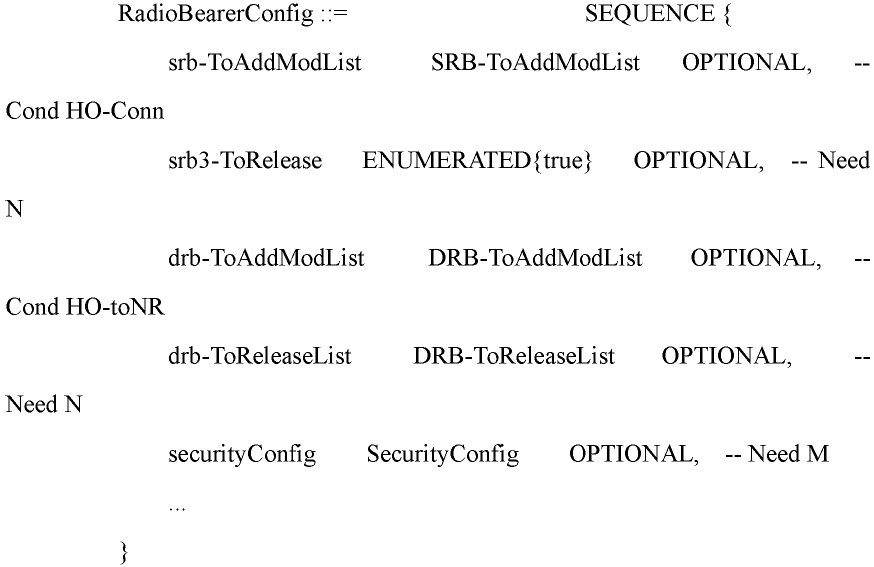

The information element srb-ToAddModList is used to add an SRB, and the drb-ToAddModList is used to add a DRB.

In this embodiment of this application, data of the first plane (data plane) can be transmitted through a first plane bearer (DPRB). A base station and a CN can have their own DPF logical functions, and the first plane bearer can be categorized into two types:
Type 1: transmitting data interacted between a UE and the base station and terminated at the base station (corresponding to FIG. 5); and
Type 2: transmitting data interacted between the UE and a core network and terminated at the CN (corresponding to FIG. 6).

The base station needs to distinguish between DPRB and DRB/SRB, as well as the two types: Type 1 and Type 2. For a Type 1 bearer, the base station delivers data of the bearer to the DPAP layer of the base station. For a Type 2 bearer, the base station does not deliver data of the bearer to the DPAP layer of the base station to save base station resources.

Schemes to add a DPRB include the following.

Scheme 1: The DPRB can be a new type of radio bearer different from SRB and DRB. Correspondingly, a new information element is introduced for adding the DPRB. For example:

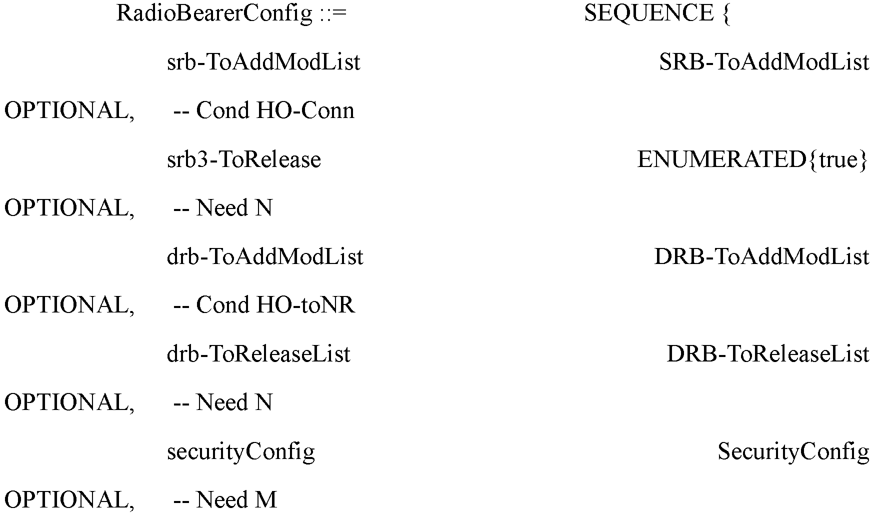

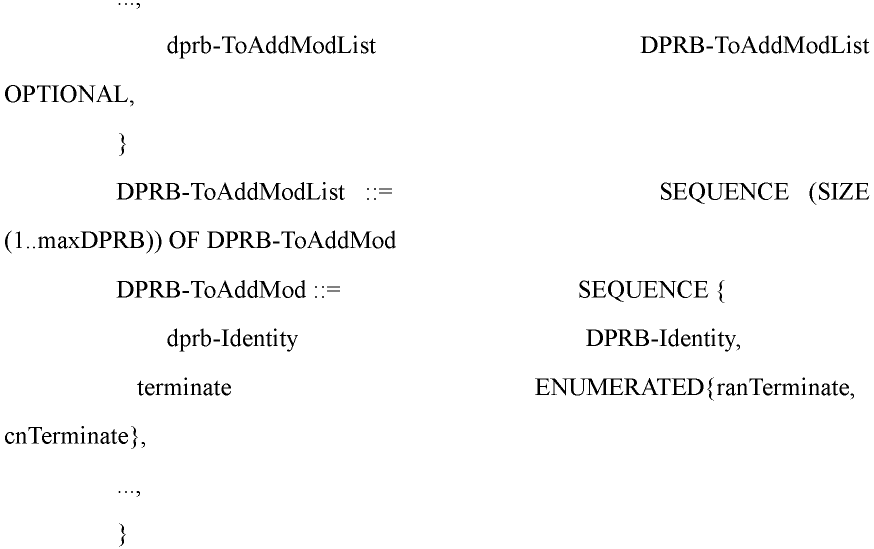

The dprb-ToAddModList is a new information element used to add a DPRB.

Optionally, DPRBs are categorized into two types: one for interaction of data plane data between the UE and the base station, and the other for interaction of data plane data between the UE and the CN or DPF. To distinguish between these two types of DPRBs, one method is to, when a DPRB is to be added, introduce an indication information to indicate which type the DPRB is. For example, the above-mentioned terminate information element is used as the indication information to indicate the type of the DPRB. Another method is to introduce two new information elements as two different bearer types to add these two types of bearers separately. For example, dprb-ToAddModList 1 is used to add a Type 1 DPRB, and dprb-ToAddModList 2 is used to add a Type 2 DPRB.

Scheme 2: The DPRB can be a special DRB. drb-ToAddModList is used to add a DPRB, and one indication information is introduced to indicate that the bearer is used to transmit data of the data plane, or to indicate that a termination point for the data of the bearer is in the radio access network (a data plane function between the UE and a RAN) or the core network (a data plane function between the UE and a core network).

For example:

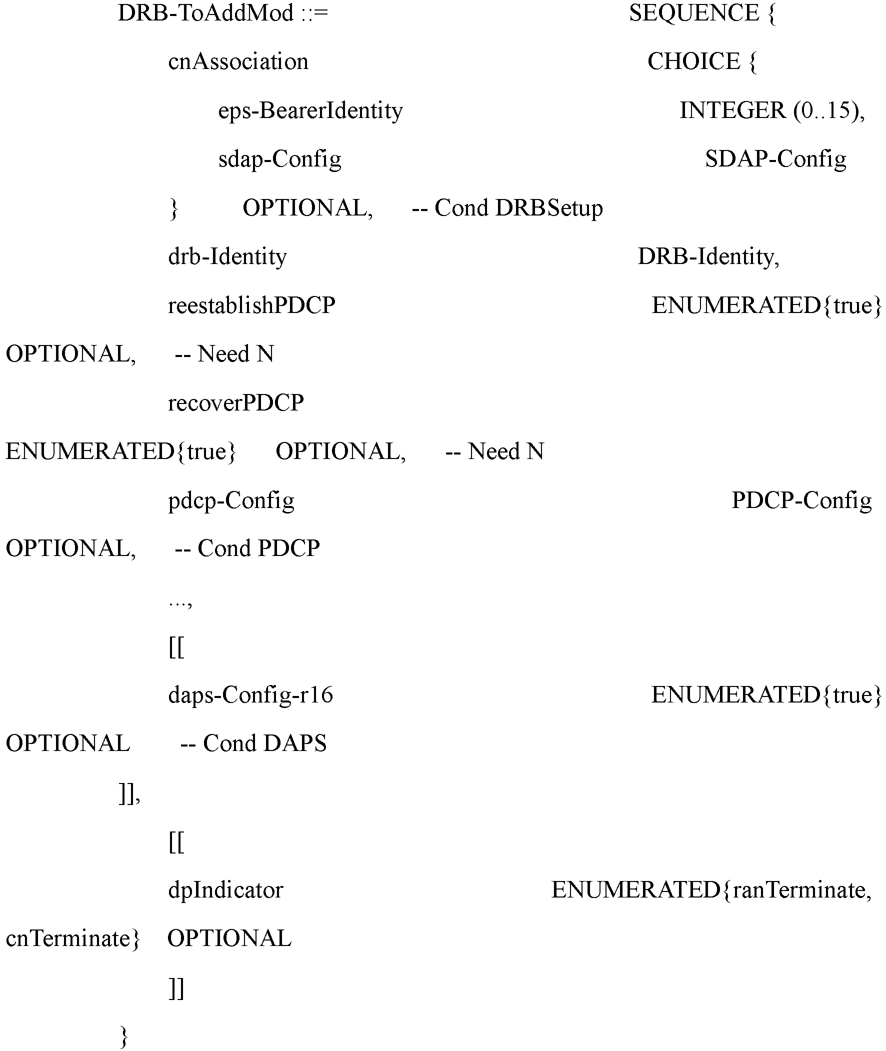

The dpIndicator is the indication information introduced. dpIndicator with a value of ranTerminate indicates that the termination point for the data of the bearer is in the radio access network RAN; and the dpIndicator with a value of cnTerminate indicates that the termination point for the data of the bearer is in the core network CN.

Step 901: The terminal establishes the first plane bearer and send an RRC reconfiguration complete message to the network-side device.

Step 902: The terminal transmits data of the first plane through the first plane bearer.

It can be understood that after establishing the first plane bearer, the terminal can send the data of the first plane to the network-side device or receive the data of the first plane through the first plane bearer.

Optionally, before the terminal receives the RRC reconfiguration message sent by the network-side device, the method further includes:
sending, by the terminal, an RRC message to the network-side device, where the RRC message is used to request establishment of the first plane bearer.

It can be understood that when the terminal has data of the data plane that needs to be sent to the base station, the terminal sends an RRC message to the network-side device to request the establishment of the first plane bearer.

Optionally, the RRC message carries second information, where the second information is used to indicate at least one of the following: the type of data of the first plane, and QoS information.

Optionally, the type of data of the first plane includes at least one of the following: self-organizing network SON data, minimization of drive test MDT data, positioning data, sensing data, and artificial intelligence AI data.

Optionally, before the terminal receives the RRC reconfiguration message sent by the network-side device, the method further includes:
sending, by the terminal, access capability information of the terminal to the network-side device, the access capability information including a capability of the terminal to support the first plane.

Optionally, before the network-side device sends an RRC reconfiguration message to instruct the terminal to establish the first plane bearer, the network-side device needs to know that the terminal has a capability to support the first plane.

Optionally, the terminal receives a terminal capability query message sent by the network-side device, and sends the access capability information of the terminal to the network-side device, where the access capability information includes the capability of the terminal to support the first plane.

Optionally, the first information includes a type of the first plane bearer, the type of the first plane bearer including one of the following: for transmitting data of the first plane between a terminal and an access network device and for transmitting data of the first plane between a terminal and a core network device or a first plane function entity.

In some optional embodiments, the first plane bearer is different from a signaling radio bearer SRB and a data radio bearer DRB.

In some optional embodiments, the first plane bearer can be a special DRB.

Optionally, the RRC reconfiguration message further carries third information, where the third information is used to indicate priority information of the first plane bearer; or
the priority information of the first plane bearer is specified by a protocol.

Optionally, the priority information of the first plane bearer includes:
that the first plane bearer is lower than the SRB and higher than the DRB in priority; or that the first plane bearer is lower than both the SRB and the DRB in priority.

The transmission priority of the first plane bearer relative to SRB/DRB can be indicated when the first plane bearer is configured. For example, it is indicated that the transmission priority of the first plane bearer is lower than that of the SRB but higher than that of the DRB; or it is indicated that the transmission priority of the first plane bearer is lower than that of both the SRB and the DRB; and it may alternatively be specified by a protocol, for example, a protocol specifies that the transmission priority of the first plane bearer is always lower than that of both the SRB and the DRB.

Optionally, a key used by the first plane bearer is different from a key used by the DRB of the terminal or a key used by the SRB of the terminal; or
a key used by the first plane bearer is the same as a key used by the SRB of the terminal, and a bearer identifier of the first plane bearer shares a same number space with a bearer identifier of the SRB of the terminal; or
a key used by the first plane bearer is the same as a key used by the DRB of the terminal, and a bearer identifier of the first plane bearer shares a same number space with a bearer identifier of the DRB of the terminal.

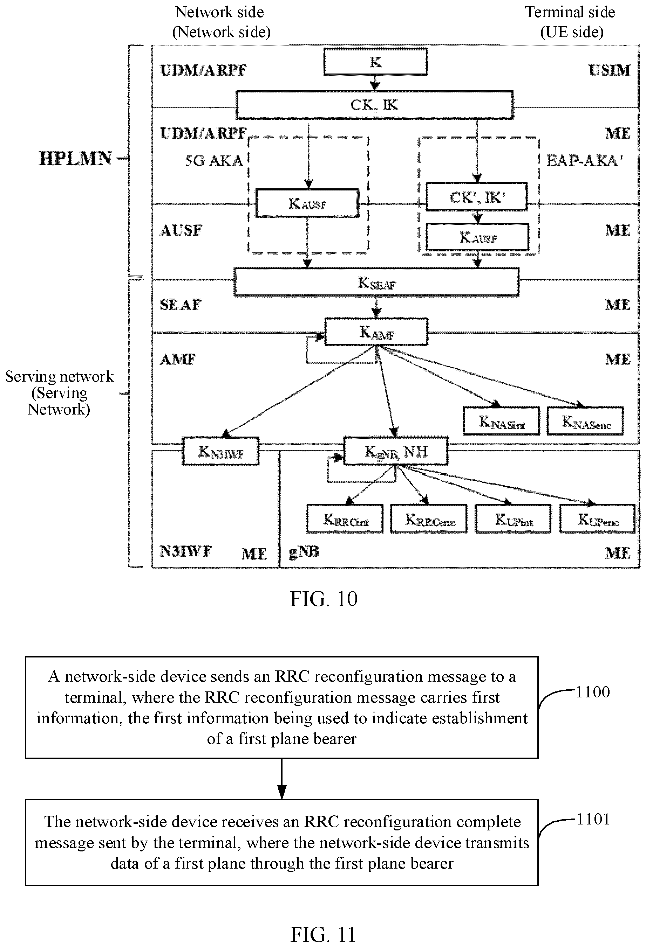

In air interfaces, data of a bearer needs to be securely protected, for example, encrypted or integrity protected. In current protocols, SRB and DRB use different security keys, and encryption and integrity protection use different security keys. The key hierarchy in the 5G system is shown in FIG. 10.

The base station and UE generate 4 keys based on K_{gNB} key: K_{RRCint}, K_{RRCenc}, K_{UPint}, and K_{UPenc}, where:
K_{RRCint} is used for integrity protection of data of the SRB;
K_{RRCenc} is used for encryption and decryption of data of the SRB;
K_{UPint} is used for integrity protection of data of the DRB; and
K_{UPenc} is used for encryption and decryption of data of the DRB.

Security protection requires use of a bearer ID as an input parameter. In consideration of security, the following schemes are proposed for the security protection of the first plane bearer:
Scheme 1: In addition to generating 4 keys K_{RRCint}, K_{RRCenc}, K_{UPint}, and K_{UPenc} based on the K_{gNG} key, the base station and UE also generate two keys, such as K_{DPint} and K_{DPenc}, which are used for integrity protection and encryption/decryption of data of the first plane bearer, respectively. In this case, the bearer ID of the first plane bearer can be numbered independently, that is, the bearer ID of the first plane bearer has its own independent number space. In this case, for a terminal, the bearer ID of the first plane bearer can be duplicated (identical) to the bearer ID of the SRB or DRB.
Scheme 2: The first plane bearer uses a same key as SRBs, that is, K_{RRCint} is used for integrity protection of data of the first plane bearer, and K_{RRCenc} is used for encryption and decryption of data of the first plane bearer. In this case, to avoid reducing security, the bearer ID of the first plane bearer is numbered together with the bearer IDs of the SRBs, that is, the bearer ID of the first plane bearer shares a number space (uses the same number space) with the bearer IDs of the SRBs. In this case, for a terminal, the first plane bearer ID cannot be duplicated (identical) to a bearer ID of an SRB.
Scheme 3: The first plane bearer uses a same key as DRBs, that is, K_{UPint} is used for integrity protection of data of the first plane bearer, and K_{UPenc} is used for encryption and decryption of data of the first plane bearer. In this case, to avoid reducing security, the bearer ID of the first plane bearer is numbered together with the bearer IDs of the DRBs, that is, the bearer ID of the first plane bearer shares a number space (uses the same number space) with the bearer IDs of the DRBs. In this case, for a terminal, the bearer ID of the first plane bearer cannot be duplicated (identical) to a bearer ID of a DRB.

Optionally, the transmitting, by the terminal, data of the first plane through the first plane bearer includes:
receiving at a first protocol layer, by the terminal, a first data packet of the first plane from a second protocol layer, where the first protocol layer is used to transmit data of the first plane, the second protocol layer is an immediately upper layer of the first protocol layer, and the second protocol layer is used to generate data of the first plane;
generating at the first protocol layer, by the terminal, a protocol data unit PDU of the first protocol layer based on the first data packet, where a header of the PDU includes first indication information, the first indication information being used to indicate the second protocol layer;
delivering at the first protocol layer, by the terminal, the PDU to a third protocol layer, where the third protocol layer is an immediately lower layer of the first protocol layer, and the third protocol layer includes at least one of the following: a PDCP layer, an SDAP layer, and a tunnel protocol layer; and
sending, by the terminal, the PDU through the first plane bearer.

In this case, the terminal acts as the sender of the first plane data. Reference may be made to the content of the embodiment described in FIG. 7, and details are not repeated herein.

Optionally, the transmitting, by the terminal, data of the first plane through the first plane bearer includes:
receiving at a first protocol layer, by the terminal, a protocol data unit PDU of the first protocol layer from a third protocol layer through the first plane bearer, where the third protocol layer is an immediately lower layer of the first protocol layer, and the third protocol layer includes at least one of the following: a PDCP layer, a SDAP layer, and a tunnel protocol layer;
parsing at the first protocol layer, by the terminal, the PDU to obtain first indication information and a first data packet of the first plane, where the first indication information is used to indicate a second protocol layer, and the PDU includes the first indication information; and
delivering at the first protocol layer, by the terminal, the first data packet to the second protocol layer of the terminal based on the first indication information, where the second protocol layer is an immediately upper layer of the first protocol layer, and the second protocol layer is used to obtain data of the first plane.

In this case, the terminal acts as the receiver of the first plane data. Reference may be made to the content of the embodiment described in FIG. 8, and details are not repeated herein.

Optionally, the second protocol layer includes one of the following: a self-organizing network SON protocol layer, a minimization of drive test MDT protocol layer, a positioning protocol layer, a sensing protocol layer, or an artificial intelligence AI protocol layer.

In this embodiment of this application, the terminal receives an RRC reconfiguration message, establishes the first plane bearer, and subsequently performs transmission of the first plane data with the network-side device based on the first plane bearer. In this way, the transmission of data from various types of service layers can be supported, and the introduction of new "service" layers is supported to meet the needs of future new technology developments. As compared with the control plane transmission method, the existing control signaling transmission is not affected.

FIG. 11 is the fourth flow diagram of the data transmission method of a communication system according to an embodiment of this application. The method is applied to a network-side device. As shown in FIG. 11, the method includes the following steps.

Step 1100: A network-side device sends an RRC reconfiguration message to a terminal, where the RRC reconfiguration message carries first information, the first information being used to indicate establishment of a first plane bearer.

The first plane bearer is used to transmit data of the first plane, the first plane is used to transmit data terminated at an internal node of a communication network, and the first plane is different from a control plane and a user plane.

Optionally, the network-side device is an access network device, such as a base station.

The network-side device sends to the terminal an RRC reconfiguration message carrying an information element to indicate the establishment of a DPRB. For details, reference may be made to the "Schemes to add a DPRB" in the foregoing embodiment, and details are not repeated herein.

Step 1101: The network-side device receives an RRC reconfiguration complete message sent by the terminal, where the network-side device transmits data of the first plane through the first plane bearer.

It can be understood that the network-side device receives the RRC reconfiguration complete message sent by the terminal, indicating that the terminal has established the first plane bearer, and the network-side device can interact with the terminal for the first plane data through the first plane bearer.

Optionally, before the sending, by a network-side device, an RRC reconfiguration message to a terminal, the method further includes:
receiving, by the network-side device, an RRC message sent by the terminal, where the RRC message is used to request establishment of the first plane bearer;
   or,
receiving, by the network-side device, a first message sent by a core network device or a first plane function entity, where the first message is used to indicate establishment of the first plane bearer.

Optionally, the RRC message or the first message carries second information, where the second information is used to indicate at least one of the following: the type of data of the first plane, and QoS information.

Optionally, the type of data of the first plane includes at least one of the following: self-organizing network SON data, minimization of drive test MDT data, positioning data, sensing data, and artificial intelligence AI data.

Optionally, before the network-side device sends the RRC reconfiguration message to the terminal, the method further includes:
obtaining, by the network-side device, access capability information of the terminal, where the access capability information includes a capability of the terminal to support the first plane.

Optionally, the network-side device obtains the access capability information of the terminal, including:
receiving, by the network-side device, access capability information of the terminal sent by a core network device;
   or,
sending, by the network-side device, a second message to the terminal, and receiving access capability information of the terminal returned by the terminal, where the second message is used to request access capability information of the terminal.

For example, the base station obtains the access capability information of the terminal from an AMF. If the AMF does not send the access capability information of the terminal to the base station, the base station sends a UE capability query message to the terminal, and the base station receives the access capability information returned by the terminal.

Optionally, the first information includes a type of the first plane bearer, the type of the first plane bearer including one of the following: for transmitting data of the first plane between a terminal and an access network device and for transmitting data of the first plane between a terminal and a core network device or a first plane function entity.

Optionally, the first plane bearer is different from a signaling radio bearer SRB and a data radio bearer DRB.

Optionally, the RRC reconfiguration message further carries third information, where the third information is used to indicate priority information of the first plane bearer; or
the priority information of the first plane bearer is specified by a protocol.

Optionally, the priority information of the first plane bearer includes:
that the first plane bearer is lower than the SRB and higher than the DRB in priority; or that the first plane bearer is lower than both the SRB and the DRB in priority.

The priority of the first plane bearer can be indicated when the network-side device configures the first plane bearer, that is, the RRC reconfiguration message further carries third information, where the third information is used to indicate the priority information of the first plane bearer. For example, it is indicated that the transmission priority of the first plane bearer is lower than that of the SRB but higher than that of the DRB, or it is indicated that the transmission priority of the first plane bearer is lower than that of both the SRB and the DRB; and it may alternatively be specified by a protocol, for example, a protocol specifies that the transmission priority of the first plane bearer is always lower than that of both the SRB and the DRB.

Optionally, a key used by the first plane bearer is different from a key used by the DRB of the terminal or a key used by the SRB of the terminal; or
a key used by the first plane bearer is the same as a key used by the SRB of the terminal, and a bearer identifier of the first plane bearer shares a same number space with a bearer identifier of the SRB of the terminal; or
a key used by the first plane bearer is the same as a key used by the DRB of the terminal, and a bearer identifier of the first plane bearer shares a same number space with a bearer identifier of the DRB of the terminal.

Reference may be made to the content of the security protection scheme for the first plane bearer mentioned above, and details are not repeated herein.

Optionally, the transmitting, by the network-side device, data of the first plane through the first plane bearer includes:
receiving at a first protocol layer, by the network-side device, a first data packet of the first plane from a second protocol layer, where the first protocol layer is used to transmit data of the first plane, the second protocol layer is an immediately upper layer of the first protocol layer, and the second protocol layer is used to generate data of the first plane;
generating at the first protocol layer, by the network-side device, a protocol data unit PDU of the first protocol layer based on the first data packet, where the PDU includes first indication information, the first indication information being used to indicate the second protocol layer;
delivering at the first protocol layer, by the network-side device, the PDU to a third protocol layer, where the third protocol layer is an immediately lower layer of the first protocol layer, and the third protocol layer includes at least one of the following: a PDCP layer, an SDAP layer, and a tunnel protocol layer; and
sending, by the network-side device, the PDU through the first plane bearer.

In this case, the network-side device acts as the sender of the first plane data. Reference may be made to the content of the embodiment described in FIG. 7, and details are not repeated herein.

Optionally, the transmitting, by the network-side device, data of the first plane through the first plane bearer includes:
receiving at a first protocol layer, by the network-side device, a protocol data unit PDU of the first protocol layer from a third protocol layer through the first plane bearer, where the third protocol layer is an immediately lower layer of the first protocol layer, and the third protocol layer includes at least one of the following: a PDCP layer, a SDAP layer, and a tunnel protocol layer;
parsing at the first protocol layer, by the network-side device, the PDU to obtain first indication information and a first data packet of the first plane, where the first indication information is used to indicate a second protocol layer, and the PDU includes the first indication information; and
delivering at the first protocol layer, by the network-side device, the first data packet to the second protocol layer of the network-side device based on the first indication information, where the second protocol layer is an immediately upper layer of the first protocol layer, and the second protocol layer is used to obtain data of the first plane.

In this case, the network-side device acts as the receiver of the first plane data. Reference may be made to the content of the embodiment described in FIG. 8, and details are not repeated herein.

Optionally, the second protocol layer includes one of the following: a self-organizing network SON protocol layer, a minimization of drive test MDT protocol layer, a positioning protocol layer, a sensing protocol layer, or an artificial intelligence AI protocol layer.

In this embodiment of this application, the network-side device sends an RRC reconfiguration message to the terminal, instructing the terminal to establish the first plane bearer, and after the terminal establishes the first plane bearer, interactions with the terminal for first plane data are carried out based on the first plane bearer. In this way, the transmission of data from various types of service layers can be supported, and the introduction of new "service" layers is supported to meet the needs of future new technology developments. As compared with the control plane transmission method, the existing control signaling transmission is not affected.

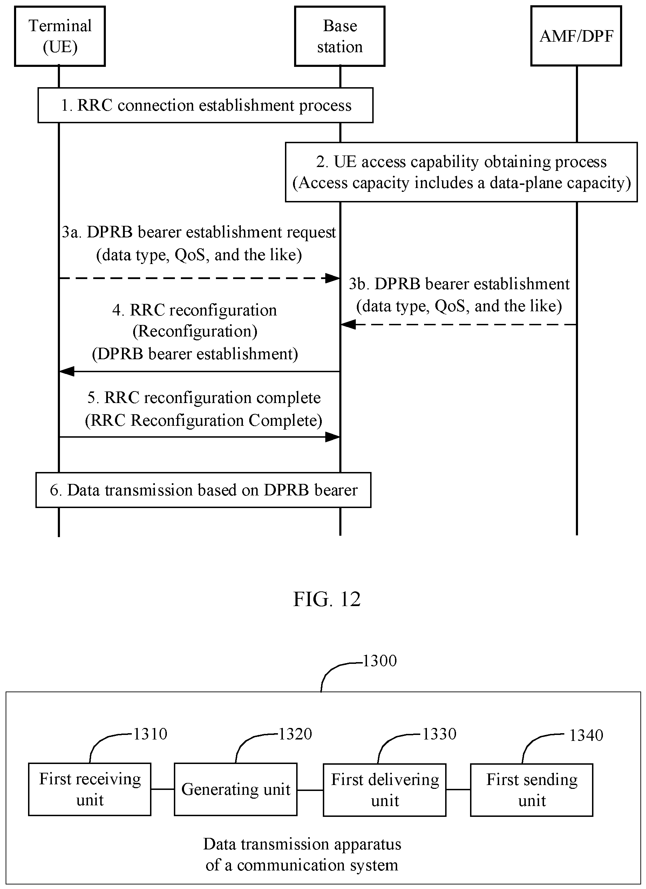

FIG. 12 is a signaling interaction diagram of a data transmission method of a communication system according to an embodiment of this application. As shown in FIG. 12, the method includes:
step 1. A terminal enters the RRC connected state and establishes an RRC connection with a base station;
step 2. The base station obtains an access capability of a UE from an AMF. If the AMF does not send the access capability information of the terminal to the base station, the base station sends a UE capability query message to the terminal to obtain the access capability information of the UE. The access capability information includes a capability of the terminal to support the data plane;
step 3. Optional step, when the terminal has data of the data plane that needs to be sent to the base station, the terminal sends an RRC message to the base station to request the establishment of a DPRB. Optionally, the message carries second information to indicate the type of data plane data (for example, the data type is SON data, MDT data, positioning data, sensing data, AI data, or the like), QoS, or the like; or, the base station receives a message sent by the AMF or a DPF, which indicates the establishment of a DPRB. The message carries second information to indicate a data type, QoS, or other information;
step 4. The base station sends to the terminal an RRC reconfiguration message carrying an information element to indicate the establishment of a DPRB (for details, reference may be made to the "Schemes to add a DPRB" in the foregoing embodiment);
step 5. The terminal establishes the DPRB and sends an RRC reconfiguration complete message to the base station; and
step 6. Data of the data plane is transmitted between the terminal and the base station through the DPRB (for details, reference may be made to the priority of the first plane bearer and the security protection scheme for the first plane bearer in the foregoing embodiment, and the content of the embodiments shown in FIG. 7 and FIG. 8).

The data transmission method of a communication system provided in this embodiment of this application can be executed by a data transmission apparatus of a communication system. In this embodiment of this application, the data transmission method of a communication system being executed by a data transmission apparatus of a communication system is used as an example to describe a data transmission apparatus of a communication system provided in an embodiment of this application.

FIG. 13 is a first schematic structural diagram of a data transmission apparatus of a communication system according to an embodiment of this application. As shown in FIG. 13, the data transmission apparatus 1300 of the communication system includes:
a first receiving unit 1310, configured to receive at a first protocol layer a first data packet of a first plane from a second protocol layer, where the second protocol layer is an immediately upper layer of the first protocol layer, the second protocol layer is used to generate data of the first plane, the first plane is used to transmit data terminated at an internal node of a communication network, and the first plane is different from a control plane and a user plane;
a generating unit 1320, configured to generate at the first protocol layer a protocol data unit PDU of the first protocol layer based on the first data packet, where the PDU includes first indication information, the first indication information being used to indicate the second protocol layer;
a first delivering unit 1330, configured to deliver at the first protocol layer the PDU to a third protocol layer, where the third protocol layer is an immediately lower layer of the first protocol layer, and the third protocol layer includes at least one of the following: a PDCP layer, an SDAP layer, and a tunnel protocol layer; and
a first sending unit 1340, configured to send the PDU through a first plane bearer, where the first plane bearer is used to transmit data of the first plane.

Optionally, the second protocol layer includes one of the following: a self-organizing network SON protocol layer, a minimization of drive test MDT protocol layer, a positioning protocol layer, a sensing protocol layer, or an artificial intelligence AI protocol layer.

Optionally, the first plane bearer is different from a signaling radio bearer SRB and a data radio bearer DRB.

Optionally, the internal node of the communication network includes an access network device, a core network device, or a first plane function entity.

Optionally, the data transmission apparatus of the communication system includes: a terminal, an access network device, a core network device, or a first plane function entity.

Optionally, the header of the PDU includes the first indication information.

In this embodiment of this application, a first plane, a first protocol layer, and a first plane bearer are introduced, and a protocol stack is designed for interaction of first plane data, so that the transmission of first plane data is achieved. In this way, the transmission of data from various types of service layers can be supported, and the introduction of new "service" layers is supported to meet the needs of future new technology developments. As compared with the control plane transmission method, the existing control signaling transmission is not affected.

The data transmission apparatus of the communication system provided in this embodiment of this application can implement the processes implemented in the method embodiment of FIG. 7, with the same technical effects achieved. To avoid repetition, details are not repeated herein.

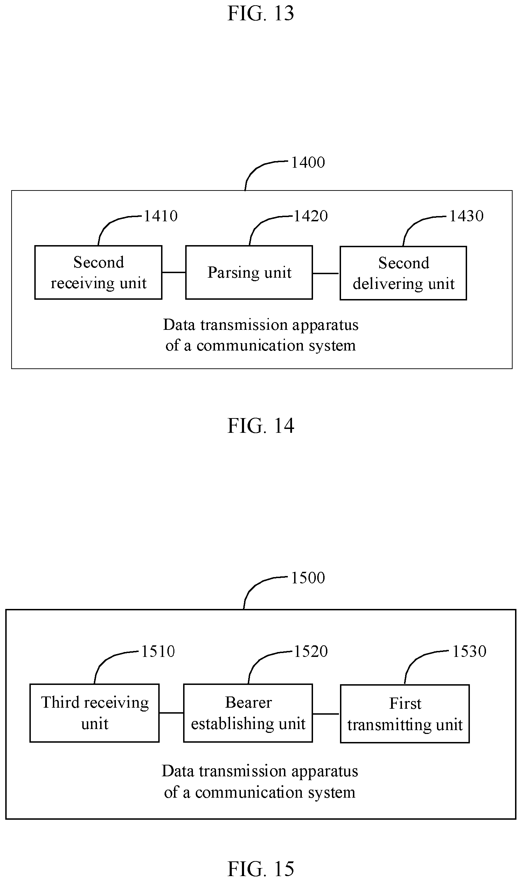

FIG. 14 is a second schematic structural diagram of a second data transmission apparatus of a communication system according to an embodiment of this application. As shown in FIG. 14, the data transmission apparatus 1400 of the communication system includes:
a second receiving unit 1410, configured to receive at a first protocol layer a protocol data unit PDU of the first protocol layer from a third protocol layer through a first plane bearer, where the first plane bearer is used to transmit data of a first plane, the third protocol layer is an immediately lower layer of the first protocol layer, and the third protocol layer includes at least one of the following: a packet data convergence protocol PDCP layer, a service data adaptation protocol SDAP layer, and a tunnel protocol layer;
a parsing unit 1420, configured to parse at the first protocol layer the PDU to obtain first indication information and a first data packet of the first plane, where the first plane is used to transmit data terminated at an internal node of a communication network, the first plane is different from a control plane CP and a user plane UP, the PDU includes the first indication information, and the first indication information is used to indicate a second protocol layer; and
a second delivering unit 1430, configured to deliver at the first protocol layer the first data packet to the second protocol layer based on the first indication information, where the second protocol layer is an immediately upper layer of the first protocol layer, and the second protocol layer is used to obtain data of the first plane.

Optionally, the second protocol layer includes one of the following: a self-organizing network SON protocol layer, a minimization of drive test MDT protocol layer, a positioning protocol layer, a sensing protocol layer, or an artificial intelligence AI protocol layer.

Optionally, the first plane bearer is different from a signaling radio bearer SRB and a data radio bearer DRB.

Optionally, the internal node of the communication network includes an access network device, a core network device, or a first plane function entity.

Optionally, the data transmission apparatus of the communication system includes: a terminal, an access network device, a core network device, or a first plane function entity.

Optionally, the header of the PDU includes the first indication information.

In this embodiment of this application, a first plane, a first protocol layer, and a first plane bearer are introduced, and a protocol stack is designed for interaction of first plane data, so that the transmission of first plane data is achieved. In this way, the transmission of data from various types of service layers can be supported, and the introduction of new "service" layers is supported to meet the needs of future new technology developments. As compared with the control plane transmission method, the existing control signaling transmission is not affected.

The data transmission apparatus of the communication system provided in the embodiments of this application can implement the processes of the method embodiment shown in FIG. 8, with the same technical effects achieved. To avoid repetition, details are not repeated herein.

FIG. 15 is a third schematic structural diagram of a data transmission apparatus of a communication system according to an embodiment of this application. As shown in FIG. 15, the data transmission apparatus 1500 of the communication system includes:
a third receiving unit 1510, configured to receive an RRC reconfiguration message sent by a network-side device, where the RRC reconfiguration message carries first information, the first information being used to indicate establishment of a first plane bearer;
a bearer establishing unit 1520, configured to establish the first plane bearer and send an RRC reconfiguration complete message to the network-side device; and
a first transmitting unit 1530, configured to transmit data of the first plane through the first plane bearer, where
The first plane bearer is used to transmit data of the first plane, the first plane is used to transmit data terminated at an internal node of a communication network, and the first plane is different from a control plane and a user plane.

Optionally, the apparatus further includes:
a second sending unit, configured to send an RRC message to the network-side device, where the RRC message is used to request the establishment of the first plane bearer.

Optionally, the RRC message carries second information, where the second information is used to indicate at least one of the following: the type of data of the first plane, and QoS information.

Optionally, the type of data of the first plane includes at least one of the following: self-organizing network SON data, minimization of drive test MDT data, positioning data, sensing data, and artificial intelligence AI data.

Optionally, the apparatus further includes:
a third sending unit, configured to send access capability information of the terminal to the network-side device, where the access capability information includes a capability of the terminal to support the first plane.

Optionally, the first information includes a type of the first plane bearer, the type of the first plane bearer including one of the following: for transmitting data of the first plane between a terminal and an access network device and for transmitting data of the first plane between a terminal and a core network device or a first plane function entity.

Optionally, the first plane bearer is different from a signaling radio bearer SRB and a data radio bearer DRB.

Optionally, the RRC reconfiguration message further carries third information, where the third information is used to indicate priority information of the first plane bearer; or
the priority information of the first plane bearer is specified by a protocol.

Optionally, the priority information of the first plane bearer includes:
that the first plane bearer is lower than the SRB and higher than the DRB in priority; or that the first plane bearer is lower than both the SRB and the DRB in priority.

Optionally, a key used by the first plane bearer is different from a key used by the DRB of the terminal or a key used by the SRB of the terminal; or
a key used by the first plane bearer is the same as a key used by the SRB of the terminal, and a bearer identifier of the first plane bearer shares a same number space with a bearer identifier of the SRB of the terminal; or
a key used by the first plane bearer is the same as a key used by the DRB of the terminal, and a bearer identifier of the first plane bearer shares a same number space with a bearer identifier of the DRB of the terminal.

Optionally, the first transmitting unit 1530 is configured to:
receive at a first protocol layer a first data packet of the first plane from a second protocol layer, where the first protocol layer is used to transmit data of the first plane, the second protocol layer is an immediately upper layer of the first protocol layer, and the second protocol layer is used to generate data of the first plane;
generate at the first protocol layer a protocol data unit PDU of the first protocol layer based on the first data packet, where the PDU includes first indication information, and the first indication information is used to indicate the second protocol layer;
deliver at the first protocol layer the PDU to a third protocol layer, where the third protocol layer is an immediately lower layer of the first protocol layer, and the third protocol layer includes at least one of the following: a PDCP layer, an SDAP layer, and a tunnel protocol layer; and
send the PDU through the first plane bearer.

Optionally, the first transmitting unit 1530 is configured to:
receive at the first protocol layer a protocol data unit PDU of the first protocol layer from a third protocol layer through the first plane bearer, where the third protocol layer is an immediately lower layer of the first protocol layer, and the third protocol layer includes at least one of the following: a PDCP layer, an SDAP layer, and a tunnel protocol layer;
parse at the first protocol layer the PDU to obtain first indication information and a first data packet of the first plane, where the first indication information is used to indicate the second protocol layer, and the PDU includes the first indication information; and
deliver at the first protocol layer the first data packet to the second protocol layer based on the first indication information, where the second protocol layer is an immediately upper layer of the first protocol layer, and the second protocol layer is used to obtain data of the first plane.

Optionally, the second protocol layer includes one of the following: a self-organizing network SON protocol layer, a minimization of drive test MDT protocol layer, a positioning protocol layer, a sensing protocol layer, or an artificial intelligence AI protocol layer.

In this embodiment of this application, an RRC reconfiguration message is received, the first plane bearer is established, and subsequently, transmission of the first plane data with the network-side device is performed based on the first plane bearer. In this way, the transmission of data from various types of service layers can be supported, and the introduction of new "service" layers is supported to meet the needs of future new technology developments. As compared with the control plane transmission method, the existing control signaling transmission is not affected.

The data transmission apparatus of a communication system in the embodiments of this application can be an electronic device, such as an electronic device with an operating system, or a component in an electronic device, such as an integrated circuit or a chip. The electronic device may be a terminal or a device other than terminals. For example, the terminal may include but is not limited to the types of the terminal 11 listed above, and the other devices may be servers, network attached storage (Network Attached Storage, NAS), or the like, which are not specifically limited in this embodiment of this application.

The data transmission apparatus of the communication system provided in this embodiment of this application can implement the processes implemented in the method embodiment of FIG. 9, with the same technical effects achieved. To avoid repetition, details are not repeated herein.

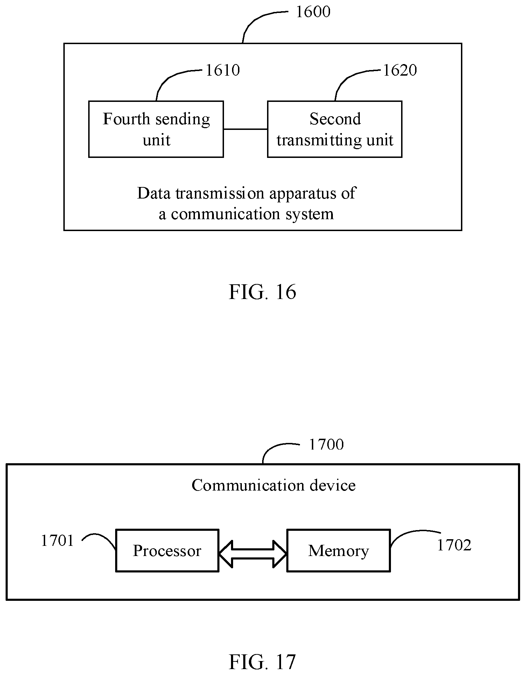

FIG. 16 is a fourth schematic structural diagram of a data transmission apparatus of a communication system according to an embodiment of this application. As shown in FIG. 16, the data transmission apparatus 1600 of the communication system includes:
a fourth sending unit 1610, configured to send an RRC reconfiguration message to a terminal, where the RRC reconfiguration message carries first information, the first information being used to indicate establishment of a first plane bearer;
a second transmitting unit 1620, configured to receive an RRC reconfiguration complete message sent by the terminal and transmit data of the first plane through the first plane bearer; where
the first plane bearer is used to transmit data of the first plane, the first plane is used to transmit data terminated at an internal node of a communication network, and the first plane is different from a control plane and a user plane.

Optionally, the apparatus further includes a fourth receiving unit configured to:
receive an RRC message sent by the terminal, where the RRC message is used to request the establishment of the first plane bearer;
   or,
receive a first message sent by a core network device or a first plane function entity, where the first message is used to indicate the establishment of the first plane bearer.

Optionally, the RRC message or the first message carries second information, where the second information is used to indicate at least one of the following: the type of data of the first plane, and QoS information.

Optionally, the type of data of the first plane includes at least one of the following: self-organizing network SON data, minimization of drive test MDT data, positioning data, sensing data, and artificial intelligence AI data.

Optionally, the apparatus further includes:
a first obtaining unit, configured to obtain the access capability information of the terminal, where the access capability information includes the capability of the terminal to support the first plane.

Optionally, the first obtaining unit is configured to:
receive the access capability information of the terminal sent by the core network device;
   or,
send a second message to the terminal, and receiving access capability information of the terminal returned by the terminal, where the second message is used to request access capability information of the terminal.

Optionally, the first information includes a type of the first plane bearer, the type of the first plane bearer including one of the following: for transmitting data of the first plane between a terminal and an access network device and for transmitting data of the first plane between a terminal and a core network device or a first plane function entity.

Optionally, the first plane bearer is different from a signaling radio bearer SRB and a data radio bearer DRB.

Optionally, the RRC reconfiguration message further carries third information, where the third information is used to indicate priority information of the first plane bearer; or
the priority information of the first plane bearer is specified by a protocol.

Optionally, the priority information of the first plane bearer includes:
that the first plane bearer is lower than the SRB and higher than the DRB in priority; or that the first plane bearer is lower than both the SRB and the DRB in priority.

Optionally, a key used by the first plane bearer is different from a key used by the DRB of the terminal or a key used by the SRB of the terminal; or
a key used by the first plane bearer is the same as a key used by the SRB of the terminal, and a bearer identifier of the first plane bearer shares a same number space with a bearer identifier of the SRB of the terminal; or
a key used by the first plane bearer is the same as a key used by the DRB of the terminal, and a bearer identifier of the first plane bearer shares a same number space with a bearer identifier of the DRB of the terminal.

Optionally, the transmitting data of the first plane through the first plane bearer includes:
receiving at a first protocol layer a first data packet of the first plane from a second protocol layer, where the first protocol layer is used to transmit data of the first plane, the second protocol layer is an immediately upper layer of the first protocol layer, and the second protocol layer is used to generate data of the first plane;
generating at the first protocol layer a protocol data unit PDU of the first protocol layer based on the first data packet, where the PDU includes first indication information, and the first indication information is used to indicate the second protocol layer;
delivering at the first protocol layer the PDU to a third protocol layer, where the third protocol layer is an immediately lower layer of the first protocol layer, and the third protocol layer includes at least one of the following: a PDCP layer, an SDAP layer, and a tunnel protocol layer; and
sending the PDU through the first plane bearer.

Optionally, the transmitting data of the first plane through the first plane bearer includes:
receiving at the first protocol layer a protocol data unit PDU of the first protocol layer from a third protocol layer through the first plane bearer, where the third protocol layer is an immediately lower layer of the first protocol layer, and the third protocol layer includes at least one of the following: a PDCP layer, an SDAP layer, and a tunnel protocol layer;
parsing at the first protocol layer the PDU to obtain first indication information and a first data packet of the first plane, where the first indication information is used to indicate the second protocol layer, and the PDU includes the first indication information; and
delivering at the first protocol layer the first data packet to the second protocol layer based on the first indication information, where the second protocol layer is an immediately upper layer of the first protocol layer, and the second protocol layer is used to obtain data of the first plane.

Optionally, the second protocol layer includes one of the following: a self-organizing network SON protocol layer, a minimization of drive test MDT protocol layer, a positioning protocol layer, a sensing protocol layer, or an artificial intelligence AI protocol layer.

In this embodiment of this application, an RRC reconfiguration message is sent to the terminal, instructing the terminal to establish the first plane bearer, and after the terminal establishes the first plane bearer, interactions with the terminal for first plane data are carried out based on the first plane bearer. In this way, the transmission of data from various types of service layers can be supported, and the introduction of new "service" layers is supported to meet the needs of future new technology developments. As compared with the control plane transmission method, the existing control signaling transmission is not affected.

The data transmission apparatus of the communication system provided in this embodiment of this application can implement the processes implemented in the method embodiment of FIG. 11, with the same technical effects achieved. To avoid repetition, details are not repeated herein.

Optionally, as shown in FIG. 17, an embodiment of this application further provides a communication device 1700 including a processor 1701 and a memory 1702. The memory 1702 has stored thereon a program or instruction capable of running on the processor 1701. For example, if the communication device 1700 is a terminal, when the program or instruction is executed by the processor 1701, the steps of the foregoing embodiment of the data transmission method of a communication system are implemented, with the same technical effects achieved. To avoid repetition, details are not repeated herein. When the communication device 1700 is a network-side device, the program or instruction is executed by the processor 1701 to implement the steps of the foregoing embodiment of the data transmission method of a communication system, with the same technical effects achieved. To avoid repetition, details are not repeated herein.

An embodiment of this application further provides a sending-end device including a processor and a communication interface, where the communication interface is configured to receive at a first protocol layer a first data packet of a first plane from a second protocol layer; the processor is configured to generate at the first protocol layer a protocol data unit PDU of the first protocol layer based on the first data packet; the communication interface is further configured to deliver at the first protocol layer the PDU to a third protocol layer; and the communication interface is further configured to send the PDU through a first plane bearer. This sending-end device embodiment corresponds to the foregoing method embodiment on the sending-end device side. All processes and implementations in the foregoing method embodiment are applicable to this sending-end device embodiment, with the same technical effects achieved.

An embodiment of this application further provides a receiving-end device including a processor and a communication interface, where the communication interface is configured to receive at a first protocol layer a protocol data unit PDU of the first protocol layer from a third protocol layer of the receiving-end device through a first plane bearer; the processor is configured to parse at the first protocol layer the PDU to obtain first indication information and a first data packet of the first plane; and the communication interface is further configured to deliver at the first protocol layer the first data packet to the second protocol layer of the receiving-end device based on the first indication information. This receiving-end device embodiment corresponds to the foregoing method embodiment on the receiving-end device side. All processes and implementations in the foregoing method embodiment are applicable to this receiving-end device embodiment, with the same technical effects achieved.

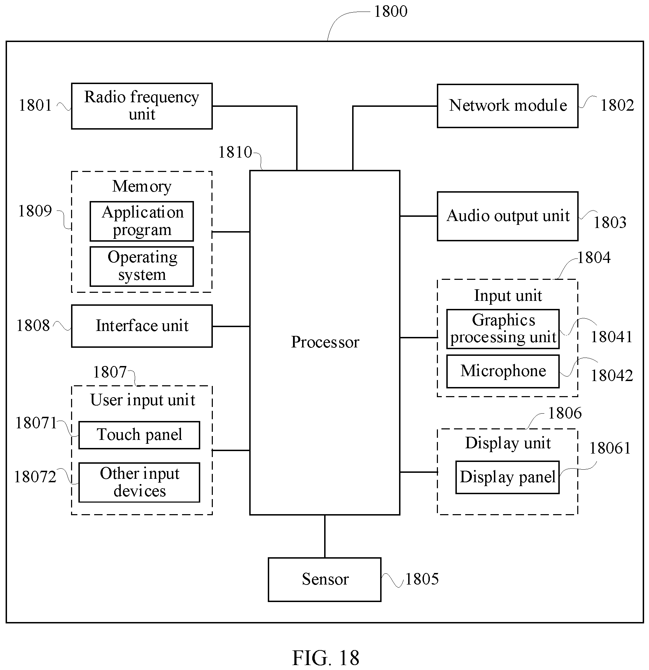

An embodiment of this application further provides a terminal including a processor and a communication interface, where the communication interface is configured to receive an RRC reconfiguration message sent by a network-side device; the communication interface is further configured to establish the first plane bearer and send an RRC reconfiguration complete message to the network-side device; and the communication interface is further configured to transmit data of a first plane through the first plane bearer. This terminal embodiment corresponds to the foregoing method embodiment on the terminal side. All processes and implementations in the foregoing method embodiment are applicable to this terminal embodiment, with the same technical effects achieved. Specifically, FIG. 18 is a schematic diagram of a hardware structure of a terminal implementing embodiments of this application.

The terminal 1800 includes but is not limited to at least part of these components: a radio frequency unit 1801, a network module 1802, an audio output unit 1803, an input unit 1804, a sensor 1805, a display unit 1806, a user input unit 1807, an interface unit 1808, a memory 1809, a processor 1810, and the like.

Persons skilled in the art can understand that the terminal 1800 may further include a power supply (for example, a battery) supplying power to the components, and the power supply may be logically connected to the processor 1810 through a power management system. In this way, functions such as charge management, discharge management, and power consumption management are implemented by using the power management system. The structure of the terminal shown in FIG. 18 does not constitute any limitation on the terminal. The terminal may include more or fewer components than shown in the figure, or a combination of some components, or the components disposed differently. Details are not described herein again.

It should be understood that in this embodiment of this application, the input unit 1804 may include a graphics processing unit (graphics processing unit, GPU) 18041 and a microphone 18042. The graphics processing unit 18041 processes image data of a static picture or a video that is obtained by an image capture apparatus (for example, a camera) in a video capture mode or an image capture mode. The display unit 1806 may include a display panel 18061, and the display panel 18061 may be configured in a form of a liquid crystal display, an organic light-emitting diode, and the like. The user input unit 1807 includes at least one of a touch panel 18071 and other input devices 18072. The touch panel 18071 is also referred to as a touchscreen. The touch panel 18071 may include two parts: a touch detection apparatus and a touch controller. The other input devices 18072 may include but are not limited to a physical keyboard, a function key (such as a volume control key or a power on/off key), a trackball, a mouse, a joystick, and the like. Details are not described herein.

In an embodiment of this application, the radio frequency unit 1801 receives downlink data from a network-side device and transfers the data to the processor 1810 for processing; and the radio frequency unit 1801 can additionally send uplink data to the network-side device. Generally, the radio frequency unit 1801 includes but is not limited to an antenna, an amplifier, a transceiver, a coupler, a low noise amplifier, a duplexer, and the like.

The memory 1809 may be configured to store software programs or instructions and various data. The memory 1809 may include a first storage area for storing programs or instructions and a second storage area for storing data. The first storage area may store an operating system, an application program or instructions required by at least one function (for example, a sound playback function or an image playback function), and the like. Additionally, the memory 1809 may be a volatile memory or a non-volatile memory, or the memory 1809 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1809 in the embodiments of this application includes but is not be limited to these or any other applicable types of memories.

The processor 1810 may include one or more processing units. Optionally, the processor 1810 may integrate an application processor and a modem processor. The application processor primarily processes operations involving an operating system, user interface, application program, or the like. The modem processor primarily processes radio communication signals, for example, being a baseband processor. It can be understood that the modem processor may be alternatively not integrated in the processor 1810.

The radio frequency unit 1801 is configured to receive an RRC reconfiguration message sent by a network-side device, where the RRC reconfiguration message carries first information, the first information being used to indicate establishment of a first plane bearer.

The radio frequency unit 1801 is further configured to establish the first plane bearer and send an RRC reconfiguration complete message to the network-side device.

The radio frequency unit 1801 is further configured to transmit data of the first plane through the first plane bearer.

The first plane bearer is used to transmit data of the first plane, the first plane is used to transmit data terminated at an internal node of a communication network, and the first plane is different from a control plane and a user plane.

Optionally, the radio frequency unit 1801 is further configured to send an RRC message to the network-side device, where the RRC message is used to request establishment of the first plane bearer.

Optionally, the radio frequency unit 1801 is further configured to send access capability information of the terminal to the network-side device, where the access capability information includes a capability of the terminal to support the first plane.

Optionally, the transmitting data of the first plane through the first plane bearer includes:
receiving at a first protocol layer a first data packet of the first plane from a second protocol layer, where the first protocol layer is used to transmit data of the first plane, the second protocol layer is an immediately upper layer of the first protocol layer, and the second protocol layer is used to generate data of the first plane;
generating at the first protocol layer a protocol data unit PDU of the first protocol layer based on the first data packet, where the PDU includes first indication information, and the first indication information is used to indicate the second protocol layer;
delivering at the first protocol layer the PDU to a third protocol layer, where the third protocol layer is an immediately lower layer of the first protocol layer, and the third protocol layer includes at least one of the following: a PDCP layer, an SDAP layer, and a tunnel protocol layer; and
sending, by the terminal, the PDU through the first plane bearer.

Optionally, the transmitting data of the first plane through the first plane bearer includes:
receiving at the first protocol layer a protocol data unit PDU of the first protocol layer from a third protocol layer through the first plane bearer, where the third protocol layer is an immediately lower layer of the first protocol layer, and the third protocol layer includes at least one of the following: a PDCP layer, an SDAP layer, and a tunnel protocol layer;
parsing at the first protocol layer the PDU to obtain first indication information and a first data packet of the first plane, where the first indication information is used to indicate the second protocol layer, and the PDU includes the first indication information; and
delivering at the first protocol layer the first data packet to the second protocol layer based on the first indication information, where the second protocol layer is an immediately upper layer of the first protocol layer, and the second protocol layer is used to obtain data of the first plane.

In this embodiment of this application, the terminal receives an RRC reconfiguration message, establishes the first plane bearer, and subsequently performs transmission of the first plane data with the network-side device based on the first plane bearer. In this way, the transmission of data from various types of service layers can be supported, and the introduction of new "service" layers is supported to meet the needs of future new technology developments. As compared with the control plane transmission method, the existing control signaling transmission is not affected.

An embodiment of this application further provides a network-side device including a processor and a communication interface, where the communication interface is configured to send an RRC reconfiguration message to a terminal; and the communication interface is further configured to receive an RRC reconfiguration complete message sent by the terminal and transmit data of the first plane through the first plane bearer. This network-side device embodiment corresponds to the foregoing network-side device method embodiment. All processes and implementations in the foregoing method embodiment are applicable to this network-side device embodiment, with the same technical effects achieved.

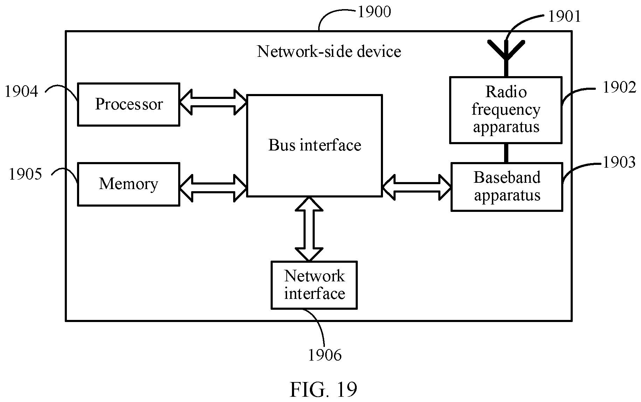

Specifically, an embodiment of this application further provides a network-side device. As shown in FIG. 19, the network-side device 1900 includes an antenna 1901, a radio frequency apparatus 1902, a baseband apparatus 1903, a processor 1904, and a memory 1905. The antenna 1901 is connected to the radio frequency apparatus 1902. In uplink, the radio frequency apparatus 1902 receives information through the antenna 1901, and sends the received information to the baseband apparatus 1903 for processing. In downlink, the baseband apparatus 1903 processes to-be-sent information, and sends the information to the radio frequency apparatus 1902; and the radio frequency apparatus 1902 processes the received information and then sends the information out through the antenna 1901.

The method executed by the network-side device in the foregoing embodiment may be implemented on the baseband apparatus 1903. The baseband apparatus 1903 includes a baseband processor.

The baseband apparatus 1903 may include, for example, at least one baseband processing unit, where a plurality of chips are disposed on the baseband processing unit. As shown in FIG. 19, one of the chips is, for example, a baseband processor, and connected to the memory 1905 through a bus interface, to invoke the program in the memory 1905 to perform the operations of the network device shown in the foregoing method embodiment.

The network-side device may further include a network interface 1906, where the interface is, for example, a common public radio interface (Common Public Radio Interface, CPRI).

Specifically, the network-side device 1900 in this embodiment of the present invention further includes: an instruction or program stored in the memory 1905 and capable of running on the processor 1904. The processor 1904 invokes the instruction or program in the memory 1905 to execute the method executed by the modules shown in FIG. 16, with the same technical effects achieved. To avoid repetition, details are not repeated herein.

An embodiment of this application further provides a readable storage medium. The readable storage medium has stored thereon a program or instruction, and when the program or instruction is executed by a processor, the processes of the foregoing embodiment of the data transmission method of a communication system are implemented, with the same technical effects achieved. To avoid repetition, details are not repeated herein.

The processor is a processor in the terminal in the foregoing embodiment. The readable storage medium includes a computer-readable storage medium such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instruction, to implement the processes of the foregoing embodiment of the data transmission method of a communication system, with the same technical effects achieved. To avoid repetition, details are not repeated herein.

It should be understood that the chip mentioned in an embodiment of this application may also be referred to as a system-level chip, a system chip, a chip system, a system-on-chip, or the like.

An embodiment of this application further provides a computer program/program product, where the computer program/program product is stored in a storage medium, and the computer program/program product is executed by at least one processor to implement the processes of the foregoing embodiment of the data transmission method of a communication system, with the same technical effects achieved. To avoid repetition, details are not repeated herein.

An embodiment of this application further provides a communication system including a sending-end device and a receiving-end device. The sending-end device may be configured to execute the steps of the foregoing data transmission method of a communication system, and the receiving-end device may be configured to execute the steps of the foregoing data transmission method of a communication system.

An embodiment of this application further provides a communication system including a terminal and a network-side device. The terminal may be configured to execute the steps of the foregoing data transmission method of a communication system, and the network-side device may be configured to execute the steps of the foregoing data transmission method of a communication system.

It should be noted that in this specification, the terms "include" and "comprise," or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

Based on the above description of embodiments, persons skilled in the art can clearly understand that the method in the foregoing embodiments can be implemented through software on a necessary general hardware platform or certainly through hardware only, but in many cases, the former is the more preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A data transmission method of a communication system, comprising:
receiving at a first protocol layer, by a sending-end device, a first data packet of a first plane from a second protocol layer, wherein the second protocol layer is an immediately upper layer of the first protocol layer, the second protocol layer is used to generate data of the first plane, the first plane is used to transmit data terminated at an internal node of a communication network, and the first plane is different from a control plane and a user plane;
generating at the first protocol layer, by the sending-end device, a protocol data unit PDU of the first protocol layer based on the first data packet, wherein the PDU comprises first indication information, the first indication information being used to indicate the second protocol layer;
delivering at the first protocol layer, by the sending-end device, the PDU to a third protocol layer, wherein the third protocol layer is an immediately lower layer of the first protocol layer, and the third protocol layer comprises at least one of the following: a PDCP layer, an SDAP layer, and a tunnel protocol layer; and
sending, by the sending-end device, the PDU through a first plane bearer, wherein the first plane bearer is used to transmit data of the first plane.

2. The method according to claim 1, wherein the second protocol layer comprises one of the following: a self-organizing network SON protocol layer, a minimization of drive test MDT protocol layer, a positioning protocol layer, a sensing protocol layer, or an artificial intelligence AI protocol layer.

3. The method according to claim 1 or 2, wherein the first plane bearer is different from a signaling radio bearer SRB and a data radio bearer DRB.

4. The method according to any one of claims 1 to 3, wherein the internal node of the communication network comprises an access network device, a core network device, or a first plane function entity.

5. The method according to any one of claims 1 to 4, wherein the sending-end device comprises: a terminal, an access network device, a core network device, or a first plane function entity.

6. The method according to any one of claims 1 to 5, wherein a header of the PDU comprises the first indication information.

7. A data transmission method of a communication system, comprising:
receiving at a first protocol layer, by a receiving-end device, a protocol data unit PDU of the first protocol layer from a third protocol layer of the receiving-end device through a first plane bearer, wherein the first plane bearer is used to transmit data of a first plane, the third protocol layer is an immediately lower layer of the first protocol layer, and the third protocol layer comprises at least one of the following: a packet data convergence protocol PDCP layer, a service data adaptation protocol SDAP layer, and a tunnel protocol layer;
parsing at the first protocol layer, by the receiving-end device, the PDU to obtain first indication information and a first data packet of the first plane, wherein the first plane is used to transmit data terminated at an internal node of a communication network, the first plane is different from a control plane CP and a user plane UP, the PDU comprises the first indication information, and the first indication information is used to indicate a second protocol layer; and
delivering at the first protocol layer, by the receiving-end device, the first data packet to the second protocol layer of the receiving-end device based on the first indication information, wherein the second protocol layer is an immediately upper layer of the first protocol layer, and the second protocol layer is used to obtain data of the first plane.

8. The method according to claim 7, wherein the second protocol layer comprises one of the following: a self-organizing network SON protocol layer, a minimization of drive test MDT protocol layer, a positioning protocol layer, a sensing protocol layer, or an artificial intelligence AI protocol layer.

9. The method according to claim 7 or 8, wherein the first plane bearer is different from a signaling radio bearer SRB and a data radio bearer DRB.

10. The method according to any one of claims 7 to 9, wherein the internal node of the communication network comprises an access network device, a core network device, or a first plane function entity.

11. The method according to any one of claims 7 to 10, wherein the receiving-end device comprises: a terminal, an access network device, a core network device, or a first plane function entity.

12. The method according to any one of claims 7 to 11, wherein a header of the PDU comprises the first indication information.

13. A data transmission method of a communication system, comprising:
receiving, by a terminal, an RRC reconfiguration message sent by a network-side device, wherein the RRC reconfiguration message carries first information, the first information being used to indicate establishment of a first plane bearer;
establishing, by the terminal, the first plane bearer and sending an RRC reconfiguration complete message to the network-side device; and
transmitting, by the terminal, data of a first plane through the first plane bearer; wherein
the first plane bearer is used to transmit data of the first plane, the first plane is used to transmit data terminated at an internal node of a communication network, and the first plane is different from a control plane and a user plane.

14. The method according to claim 13, wherein before the receiving, by a terminal, an RRC reconfiguration message sent by a network-side device, the method further comprises:
sending, by the terminal, an RRC message to the network-side device, wherein the RRC message is used to request establishment of the first plane bearer.

15. The method according to claim 14, wherein the RRC message carries second information, the second information being used to indicate at least one of the following: a type of data of the first plane and QoS information.

16. The method according to claim 15, wherein the type of data of the first plane comprises at least one of the following: self-organizing network SON data, minimization of drive test MDT data, positioning data, sensing data, and artificial intelligence AI data.

17. The method according to any one of claims 13 to 16, wherein before the receiving, by a terminal, an RRC reconfiguration message sent by a network-side device, the method further comprises:
sending, by the terminal, access capability information of the terminal to the network-side device, wherein the access capability information comprises a capability of the terminal to support the first plane.

18. The method according to any one of claims 13 to 17, wherein the first information comprises a type of the first plane bearer, the type of the first plane bearer comprising one of the following: for transmitting data of the first plane between a terminal and an access network device and for transmitting data of the first plane between a terminal and a core network device or a first plane function entity.

19. The method according to any one of claims 13 to 18, wherein the first plane bearer is different from a signaling radio bearer SRB and a data radio bearer DRB.

20. The method according to any one of claims 13 to 19, wherein the RRC reconfiguration message further carries third information, the third information being used to indicate priority information of the first plane bearer; or
the priority information of the first plane bearer is specified by a protocol.

21. The method according to claim 20, wherein the priority information of the first plane bearer comprises:
that the first plane bearer is lower than an SRB and higher than a DRB in priority; or that the first plane bearer is lower than both the SRB and the DRB in priority.

22. The method according to any one of claims 13 to 21, wherein a key used by the first plane bearer is different from a key used by a DRB of the terminal or a key used by an SRB of the terminal; or
a key used by the first plane bearer is the same as a key used by the SRB of the terminal, and a bearer identifier of the first plane bearer shares a same number space with a bearer identifier of the SRB of the terminal; or
a key used by the first plane bearer is the same as a key used by the DRB of the terminal, and a bearer identifier of the first plane bearer shares a same number space with a bearer identifier of the DRB of the terminal.

23. The method according to any one of claim 13 to 22, wherein the transmitting, by the terminal, data of the first plane through the first plane bearer comprises:
receiving at a first protocol layer, by the terminal, a first data packet of the first plane from a second protocol layer, wherein the first protocol layer is used to transmit data of the first plane, the second protocol layer is an immediately upper layer of the first protocol layer, and the second protocol layer is used to generate data of the first plane;
generating at the first protocol layer, by the terminal, a protocol data unit PDU of the first protocol layer based on the first data packet, wherein the PDU comprises first indication information, the first indication information being used to indicate the second protocol layer;
delivering at the first protocol layer, by the terminal, the PDU to a third protocol layer, wherein the third protocol layer is an immediately lower layer of the first protocol layer, and the third protocol layer comprises at least one of the following: a PDCP layer, an SDAP layer, and a tunnel protocol layer; and
sending, by the terminal, the PDU through the first plane bearer.

24. The method according to any one of claim 13 to 22, wherein the transmitting, by the terminal, data of the first plane through the first plane bearer comprises:
receiving at a first protocol layer, by the terminal, a protocol data unit PDU of the first protocol layer from a third protocol layer through the first plane bearer, wherein the third protocol layer is an immediately lower layer of the first protocol layer, and the third protocol layer comprises at least one of the following: a PDCP layer, a SDAP layer, and a tunnel protocol layer;
parsing at the first protocol layer, by the terminal, the PDU to obtain first indication information and a first data packet of the first plane, wherein the first indication information is used to indicate a second protocol layer, and the PDU comprises the first indication information; and
delivering at the first protocol layer, by the terminal, the first data packet to the second protocol layer of the terminal based on the first indication information, wherein the second protocol layer is an immediately upper layer of the first protocol layer, and the second protocol layer is used to obtain data of the first plane.

25. The method according to claim 23 or 24, wherein the second protocol layer comprises one of the following: a self-organizing network SON protocol layer, a minimization of drive test MDT protocol layer, a positioning protocol layer, a sensing protocol layer, or an artificial intelligence AI protocol layer.

26. A data transmission method of a communication system, comprising:
sending, by a network-side device, an RRC reconfiguration message to a terminal, wherein the RRC reconfiguration message carries first information, the first information being used to indicate establishment of a first plane bearer; and
receiving, by the network-side device, an RRC reconfiguration complete message sent by the terminal;
transmitting, by the network-side device, data of a first plane through the first plane bearer; wherein
the first plane bearer is used to transmit data of the first plane, the first plane is used to transmit data terminated at an internal node of a communication network, and the first plane is different from a control plane and a user plane.

27. The method according to claim 26, wherein before the sending, by a network-side device, an RRC reconfiguration message to a terminal, the method further comprises:
receiving, by the network-side device, an RRC message sent by the terminal, wherein the RRC message is used to request establishment of the first plane bearer;
or,
receiving, by the network-side device, a first message sent by a core network device or a first plane function entity, wherein the first message is used to indicate establishment of the first plane bearer.

28. The method according to claim 27, wherein the RRC message or the first message carries second information, the second information being used to indicate at least one of the following: a type of data of the first plane and QoS information.

29. The method according to claim 28, wherein the type of the data of the first plane comprises at least one of the following: self-organizing network SON data, minimization of drive test MDT data, positioning data, sensing data, and artificial intelligence AI data.

30. The method according to any one of claims 26 to 29, wherein before the sending, by a network-side device, an RRC reconfiguration message to a terminal, the method further comprises:
obtaining, by the network-side device, access capability information of the terminal, wherein the access capability information comprises a capability of the terminal to support the first plane.

31. The method according to claim 30, wherein the obtaining, by the network-side device, access capability information of the terminal comprises:
receiving, by the network-side device, access capability information of the terminal sent by a core network device;
or,
sending, by the network-side device, a second message to the terminal, and receiving access capability information of the terminal returned by the terminal, wherein the second message is used to request access capability information of the terminal.

32. The method according to any one of claims 26 to 31, wherein the first information comprises a type of the first plane bearer, the type of the first plane bearer comprising one of the following: for transmitting data of the first plane between a terminal and an access network device and for transmitting data of the first plane between a terminal and a core network device or a first plane function entity.

33. The method according to any one of claims 26 to 32, wherein the first plane bearer is different from a signaling radio bearer SRB and a data radio bearer DRB.

34. The method according to any one of claims 26 to 33, wherein the RRC reconfiguration message further carries third information, the third information being used to indicate priority information of the first plane bearer; or
the priority information of the first plane bearer is specified by a protocol.

35. The method according to claim 34, wherein the priority information of the first plane bearer comprises:
that the first plane bearer is lower than an SRB and higher than a DRB in priority; or that the first plane bearer is lower than both the SRB and the DRB in priority.

36. The method according to any one of claims 26 to 35, wherein a key used by the first plane bearer is different from a key used by a DRB of the terminal or a key used by an SRB of the terminal; or
a key used by the first plane bearer is the same as a key used by the SRB of the terminal, and a bearer identifier of the first plane bearer shares a same number space with a bearer identifier of the SRB of the terminal; or
a key used by the first plane bearer is the same as a key used by the DRB of the terminal, and a bearer identifier of the first plane bearer shares a same number space with a bearer identifier of the DRB of the terminal.

37. The method according to any one of claim 26 to 36, wherein the transmitting, by the network-side device, data of the first plane through the first plane bearer comprises:
receiving at a first protocol layer, by the network-side device, a first data packet of the first plane from a second protocol layer, wherein the first protocol layer is used to transmit data of the first plane, the second protocol layer is an immediately upper layer of the first protocol layer, and the second protocol layer is used to generate data of the first plane;
generating at the first protocol layer, by the network-side device, a protocol data unit PDU of the first protocol layer based on the first data packet, wherein the PDU comprises first indication information, the first indication information being used to indicate the second protocol layer;
delivering at the first protocol layer, by the network-side device, the PDU to a third protocol layer, wherein the third protocol layer is an immediately lower layer of the first protocol layer, and the third protocol layer comprises at least one of the following: a PDCP layer, an SDAP layer, and a tunnel protocol layer; and
sending, by the network-side device, the PDU through the first plane bearer.

38. The method according to any one of claim 26 to 36, wherein the transmitting, by the network-side device, data of the first plane through the first plane bearer comprises:
receiving at a first protocol layer, by the network-side device, a protocol data unit PDU of the first protocol layer from a third protocol layer through the first plane bearer, wherein the third protocol layer is an immediately lower layer of the first protocol layer, and the third protocol layer comprises at least one of the following: a PDCP layer, a SDAP layer, and a tunnel protocol layer;
parsing at the first protocol layer, by the network-side device, the PDU to obtain first indication information and a first data packet of the first plane, wherein the first indication information is used to indicate a second protocol layer, and the PDU comprises the first indication information; and
delivering at the first protocol layer, by the network-side device, the first data packet to the second protocol layer of the network-side device based on the first indication information, wherein the second protocol layer is an immediately upper layer of the first protocol layer, and the second protocol layer is used to obtain data of the first plane.

39. The method according to claim 37 or 38, wherein the second protocol layer comprises one of the following: a self-organizing network SON protocol layer, a minimization of drive test MDT protocol layer, a positioning protocol layer, a sensing protocol layer, or an artificial intelligence AI protocol layer.

40. A data transmission apparatus of a communication system, comprising:
a first receiving unit, configured to receive at a first protocol layer a first data packet of a first plane from a second protocol layer, wherein the second protocol layer is an immediately upper layer of the first protocol layer, the second protocol layer is used to generate data of the first plane, the first plane is used to transmit data terminated at an internal node of a communication network, and the first plane is different from a control plane and a user plane;
a generating unit, configured to generate at the first protocol layer a protocol data unit PDU of the first protocol layer based on the first data packet, wherein the PDU comprises first indication information, the first indication information being used to indicate the second protocol layer;
a first delivering unit, configured to deliver at the first protocol layer the PDU to a third protocol layer, wherein the third protocol layer is an immediately lower layer of the first protocol layer, and the third protocol layer comprises at least one of the following: a PDCP layer, an SDAP layer, and a tunnel protocol layer; and
a first sending unit, configured to send the PDU through a first plane bearer, wherein the first plane bearer is used to transmit data of the first plane.

41. A data transmission apparatus of a communication system, comprising:
a second receiving unit, configured to receive at a first protocol layer a protocol data unit PDU of the first protocol layer from a third protocol layer through a first plane bearer, wherein the first plane bearer is used to transmit data of a first plane, the third protocol layer is an immediately lower layer of the first protocol layer, and the third protocol layer comprises at least one of the following: a packet data convergence protocol PDCP layer, a service data adaptation protocol SDAP layer, and a tunnel protocol layer;
a parsing unit, configured to parse at the first protocol layer the PDU to obtain first indication information and a first data packet of the first plane, wherein the first plane is used to transmit data terminated at an internal node of a communication network, the first plane is different from a control plane CP and a user plane UP, the PDU comprises the first indication information, and the first indication information is used to indicate a second protocol layer; and
a second delivering unit, configured to deliver at the first protocol layer the first data packet to the second protocol layer based on the first indication information, wherein the second protocol layer is an immediately upper layer of the first protocol layer, and the second protocol layer is used to obtain data of the first plane.

42. A data transmission apparatus of a communication system, comprising:
a third receiving unit, configured to receive an RRC reconfiguration message sent by a network-side device, wherein the RRC reconfiguration message carries first information, the first information being used to indicate establishment of a first plane bearer;
a bearer establishing unit, configured to establish the first plane bearer and send an RRC reconfiguration complete message to the network-side device; and
a first transmitting unit, configured to transmit data of a first plane through the first plane bearer, wherein
the first plane bearer is used to transmit data of the first plane, the first plane is used to transmit data terminated at an internal node of a communication network, and the first plane is different from a control plane and a user plane.

43. A data transmission apparatus of a communication system, comprising:
a fourth sending unit, configured to send an RRC reconfiguration message to a terminal, wherein the RRC reconfiguration message carries first information, the first information being used to indicate establishment of a first plane bearer;
a second transmitting unit, configured to receive an RRC reconfiguration complete message sent by the terminal and transmit data of a first plane through the first plane bearer; wherein
the first plane bearer is used to transmit data of the first plane, the first plane is used to transmit data terminated at an internal node of a communication network, and the first plane is different from a control plane and a user plane.

44. A sending-end device, comprising a processor and a memory, wherein the memory is configured to store a program or instruction capable of running on the processor, and when the program or instruction is executed by the processor, the steps of the data transmission method of a communication system according to any one of claims 1 to 6 are implemented.

45. A receiving-end device, comprising a processor and a memory, wherein the memory is configured to store a program or instruction capable of running on the processor, and when the program or instruction is executed by the processor, the steps of the data transmission method of a communication system according to any one of claims 7 to 12 are implemented.

46. A terminal, comprising a processor and a memory, wherein the memory is configured to store a program or instruction capable of running on the processor, and when the program or instruction is executed by the processor, the steps of the data transmission method of a communication system according to any one of claims 13 to 25 are implemented.

47. A network-side device, comprising a processor and a memory, wherein the memory is configured to store a program or instruction capable of running on the processor, and when the program or instruction is executed by the processor, the steps of the data transmission method of a communication system according to any one of claims 26 to 39 are implemented.

48. A readable storage medium, wherein a program or instruction is stored on the readable storage medium, and the program or instruction is executable by a processor to implement the steps of the data transmission method of a communication system according to any one of claims 1 to 6, or to implement the steps of the data transmission method of a communication system according to any one of claims 7 to 12, or to implement the steps of the data transmission method of a communication system according to any one of claims 13 to 25, or to implement the steps of the data transmission method of a communication system according to any one of claims 26 to 39.
